(19) Europäisches Patentamt
European Patent Office
Office européen des brevets

(11) EP 4 661 115 A1

(12) **EUROPEAN PATENT APPLICATION**
published in accordance with Art. 153(4) EPC

(43) Date of publication:
**10.12.2025 Bulletin 2025/50**

(21) Application number: **24908193.6**

(22) Date of filing: **20.12.2024**

(51) International Patent Classification (IPC):
***H01M 4/62*** *(2006.01)* ***H01M 10/0567*** *(2010.01)*
***H01M 10/052*** *(2010.01)* ***H01M 4/525*** *(2010.01)*
***H01M 4/505*** *(2010.01)* ***H01M 4/587*** *(2010.01)*

(52) Cooperative Patent Classification (CPC):
**H01M 4/505; H01M 4/525; H01M 4/587; H01M 4/62; H01M 10/052; H01M 10/0567;**
Y02E 60/10

(86) International application number:
**PCT/KR2024/020880**

(87) International publication number:
**WO 2025/135911 (26.06.2025 Gazette 2025/26)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **20.12.2023 KR 20230187757**

(71) Applicant: **LG Energy Solution, Ltd.**
**Seoul 07335 (KR)**

(72) Inventors:
- **YEOM, Chul Eun**
**Daejeon 34122 (KR)**
- **BAEK, Ga Young**
**Daejeon 34122 (KR)**
- **LEE, Jung Min**
**Daejeon 34122 (KR)**
- **LEE, So Yun**
**Daejeon 34122 (KR)**
- **LEE, Chul Haeng**
**Daejeon 34122 (KR)**

(74) Representative: **Hoffmann Eitle**
**Patent- und Rechtsanwälte PartmbB**
**Arabellastraße 30**
**81925 München (DE)**

(54) **LITHIUM SECONDARY BATTERY**

(57) The present invention provides a lithium secondary battery including a positive electrode, a negative electrode, a separator placed between the positive electrode and the negative electrode, and a non-aqueous electrolyte, wherein the positive electrode includes a positive electrode active material and a first additive, the non-aqueous electrolyte includes a lithium salt, an organic solvent, and a second additive, the first additive includes at least one selected from the group consisting of compounds represented by Formula 1-1 and Formula 1-2, and the second additive includes a cyclic sulfur oxide-based compound. Formula 1-1 and Formula 1-2 above are as described in the specification.

EP 4 661 115 A1

## Description

### TECHNICAL FIELD

The present invention relates to a lithium secondary battery.

### BACKGROUND ART

Lately, there has been a rapid expansion in the application of lithium secondary batteries to power storage supply of large-area devices such as automobiles and power storage devices, as well as power supply of electronic devices such as electrical, electronic, communication, and computer devices, resulting in a rising demand for high-capacity, high-output, and high-stability secondary batteries.

The lithium secondary batteries generally include a positive electrode containing a positive electrode active material, a negative electrode containing a negative electrode active material, an electrolyte serving as a medium for delivering lithium ions, and a separator. In this case, as the negative electrode active material, a carbon-based active material, a silicon-based active material, and the like may be used. In addition, as the positive electrode active material, a lithium transition metal oxide such as lithium cobalt oxide ($LiCoO_2$), lithium nickel oxide ($LiNiO_2$), and lithium nickel-cobalt-manganese composite oxide may be used.

Meanwhile, recently, high operating voltages are required to achieve high energy density in lithium secondary batteries. However, during such high voltage operation, electrolyte depletion, gas generation, and transition metal elution of the positive electrode active material due to oxidative decomposition reactions of an electrolyte cause reduced battery life performance, storage performance, and durability.

### DISCLOSURE OF THE INVENTION

### TECHNICAL PROBLEM

The present invention is designed to overcome the limitations described above, and thus, an aspect of the present invention provides a lithium secondary battery with high temperature durability, long-term life performance, and high voltage stability through the formation of a highly durable film on a positive electrode surface.

### TECHNICAL SOLUTION

[1] According to an aspect of the present invention, provided is a lithium secondary battery including a positive electrode, a negative electrode, a separator placed between the positive electrode and the negative electrode, and a non-aqueous electrolyte, wherein the positive electrode includes a positive electrode active material and a first additive, the non-aqueous electrolyte includes a lithium salt, an organic solvent, and a second additive, the first additive includes at least one selected from the group consisting of compounds represented by Formula 1-1 and Formula 1-2 below, and the second additive includes a cyclic sulfur oxide-based compound.

[Formula 1-1]

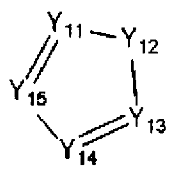

In Formula 1-1 above, $Y_{11}$ is nitrogen (N) or carbon (C) substituted with $R_{Y11}$, $Y_{12}$ is oxygen (O), sulfur (S), nitrogen (N) substituted with $R_{Y121}$, or carbon (C) substituted with $R_{Y122}$ and $R_{Y123}$, $Y_{13}$ is nitrogen (N) or carbon (C) substituted with $R_{Y13}$, $Y_{14}$ is nitrogen (N) or carbon (C) substituted with $R_{Y14}$, and $Y_{13}$ is nitrogen (N) or carbon (C) substituted with $R_{Y15}$, wherein at least one of $Y_{11}$ or $Y_{15}$ is nitrogen (N) and at least one of $Y_{11}$, $Y_{12}$, $Y_{13}$, $Y_{14}$, or $Y_{15}$ is substituted carbon (C), and $R_{Y11}$, $R_{Y121}$, $R_{Y122}$, $R_{Y123}$, $R_{Y13}$, $R_{Y14}$, and $R_{Y15}$ are each independently selected from hydrogen, an alkyl group having 1 to 3 carbon atoms, and a substituent represented by Formula 1-a below, wherein at least one of $R_{Y11}$, $R_{Y121}$, $R_{Y122}$, $R_{Y123}$, $R_{Y13}$, $R_{Y14}$, or $R_{Y15}$ is a substituent represented by Formula 1-a above.

[Formula 1-2]

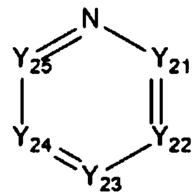

In Formula 1-2 above, $Y_{21}$ is nitrogen (N) or carbon (C) substituted with $R_{Y21}$, $Y_{22}$ is nitrogen (N) or carbon (C) substituted with $R_{Y22}$, $Y_{23}$ is nitrogen (N) or carbon (C) substituted with $R_{Y23}$, $Y_{24}$ is nitrogen (N) or carbon (C) substituted with $R_{Y24}$, and $Y_{25}$ is nitrogen (N) or carbon (C) substituted with $R_{Y25}$, wherein at least one of $Y_{21}$, $Y_{22}$, $Y_{23}$, $Y_{24}$, or $Y_{25}$ is substituted carbon (C), and $R_{Y21}$, $R_{Y22}$, $R_{Y23}$, $R_{Y24}$, and $R_{Y25}$ are each independently selected from hydrogen, an alkyl group having 1 to 3 carbon atoms, and a substituent represented by Formula 1-a below, wherein at least one of $R_{Y21}$, $R_{Y22}$, $R_{Y23}$, $R_{Y24}$, or $R_{Y25}$ is a substituent represented by Formula 1-a above.

[Formula 1-a]

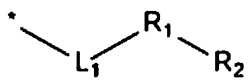

In Formula 1-a above, $L_1$ is selected from a direct bond, ester, ether, and an alkylene group having 1 to 5 carbon atoms, $R_1$ is a direct bond or an alkylene group having 1 to 5 carbon atoms, and $R_2$ is *-CH=$CH_2$ or *-C≡CH, wherein * is a bonding site.

[2] The present invention provides the lithium secondary battery according to [1] above, wherein the compound represented by Formula 1-1 above includes at least one selected from the group consisting of compounds represented by Formula 1-1-A, Formula 1-1-B, Formula 1-1-C, Formula 1-1-D, Formula 1-1-E, and Formula 1-1-F below.

[Formula 1-1-A]

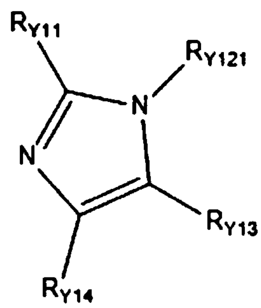

[Formula 1-1-B]

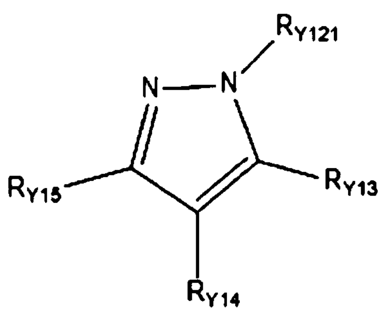

[Formula 1-1-C]

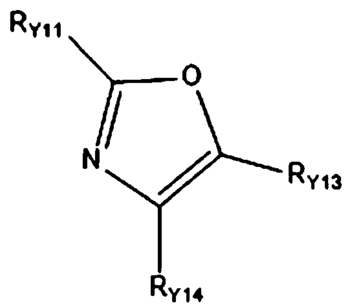

[Formula 1-1-D]

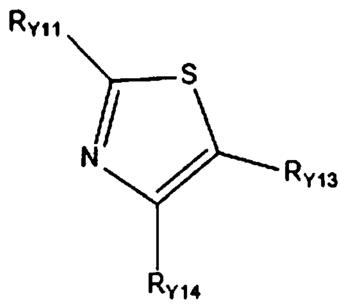

[Formula 1-1-E]

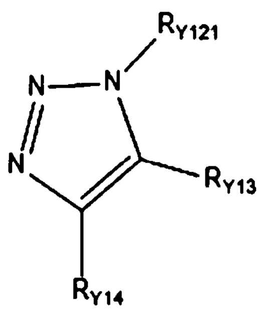

[Formula 1-1-F]

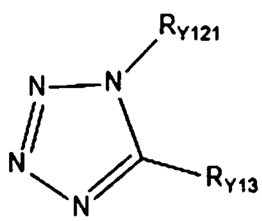

.

In Formula 1-1-A, Formula 1-1-B, Formula 1-1-C, Formula 1-1-D, Formula 1-1-E, and Formula 1-1-F above, $R_{Y11}$, $R_{Y121}$, $R_{Y122}$, $R_{Y123}$, $R_{Y13}$, $R_{Y14}$, and $R_{Y15}$ are as defined in Formula 1-1.

[3] The present invention provides the lithium secondary battery according to at least one of [1] or [2] above, wherein the compound represented by Formula 1-2 above includes at least one selected from the group consisting of compounds represented by Formula 1-2-A, Formula 1-2-B, Formula 1-2-C, Formula 1-2-D, and Formula 1-2-E below.

[Formula 1-2-A]

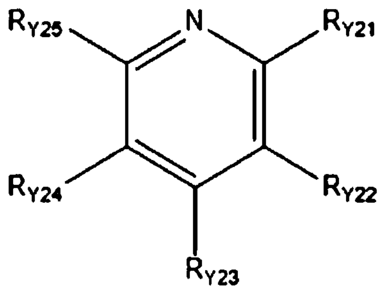

[Formula 1-2-B]

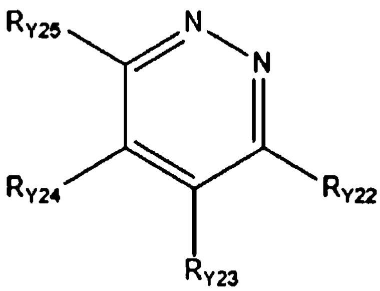

[Formula 1-2-C]

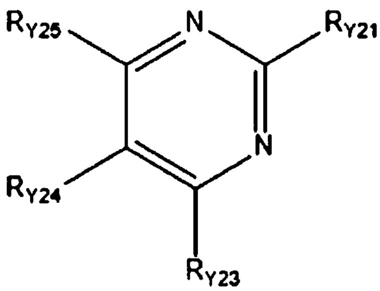

[Formula 1-2-D]

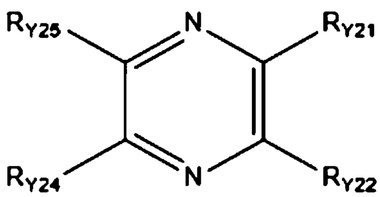

[Formula 1-2-E]

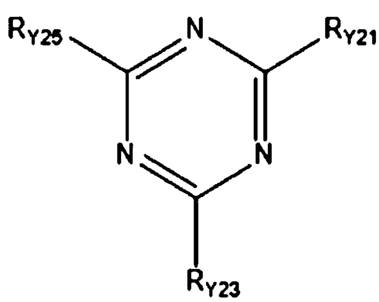

In Formula 1-2-A, Formula 1-2-B, Formula 1-2-C, Formula 1-2-D, and Formula 1-2-E above, $R_{Y21}$, $R_{Y22}$, $R_{Y23}$, $R_{Y24}$, and $R_{Y25}$ are as defined in Formula 1-2.

[4] The present invention provides the lithium secondary battery according to at least one of [1] to [3] above, wherein the first additive includes a compound represented by Formula 1-1 above.

[5] The present invention provides the lithium secondary battery according to at least one of [1] to [4] above, wherein the compound represented by Formula 1-1 above includes at least one selected from the group consisting of compounds represented by Formulas 1-1-A1 to 1-1-A4 below.

[Formula 1-1-A1]

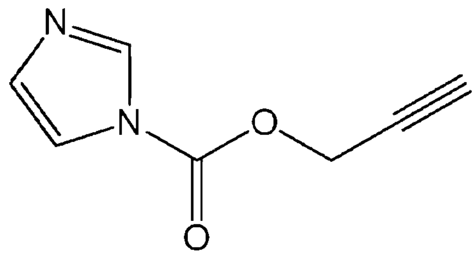

[Formula 1-1-A2]

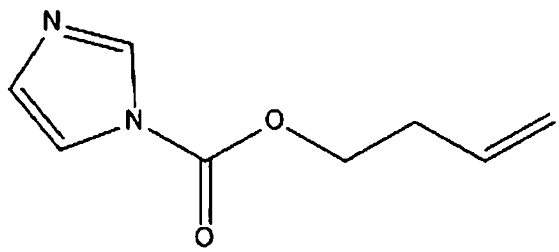

[Formula 1-1-A3]

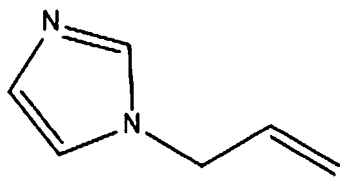

[Formula 1-1-A4]

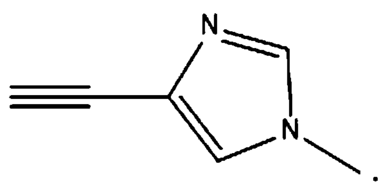

[6] The present invention provides the lithium secondary battery according to at least one of [1] to [5] above, wherein the positive electrode includes the first additive in an amount of 0.004 to 8 parts by weight with respect to 100 parts by weight of the positive electrode active material.

[7] The present invention provides the lithium secondary battery according to at least one of [1] to [6] above, wherein the positive electrode includes the first additive in an amount of 0.04 to 4 parts by weight with respect to 100 parts by weight of the positive electrode active material.

[8] The present invention provides the lithium secondary battery according to at least one of [1] to [7] above, wherein the cyclic sulfur oxide-based compound includes at least one selected from the group consisting of compounds represented by Formula 2-a, Formula 2-b, Formula 2-c, Formula 2-d, Formula 2-e, Formula 2-f, and Formula 2-g below.

[Formula 2-a]

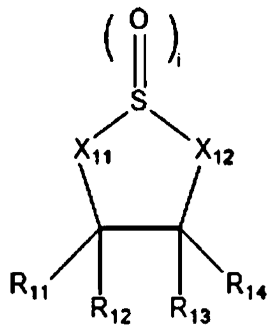

In Formula 2-a above, $X_{11}$ and $X_{12}$ are each independently *-O-* or *-C($R_{X11}$)($R_{X12}$)-*, but both $X_{11}$ and $X_{12}$ are not *-C($R_{X11}$)($R_{X12}$)-*,

$R_{11}$, $R_{14}$, $R_{X11}$, and $R_{X12}$ are each independently hydrogen, an alkyl group having 1 to 10 carbon atoms, an alkylene group having 1 to 10 carbon atoms, an alkynyl group having 1 to 10 carbon atoms, or halogen,
$R_{12}$ and $R_{13}$ are each independently hydrogen, an alkyl group having 1 to 10 carbon atoms, an alkylene group having 1 to 10 carbon atoms, an alkynyl group having 1 to 10 carbon atoms, a halogen group, or a substituent represented by Formula 3 below, or $R_{12}$ and $R_{13}$ form a fused ring together to provide a cycloalkyl group having 5 to 20 carbon atoms, a cycloalkenyl group having 5 to 20 carbon atoms, a cycloalkynyl group having 5 to 20 carbon atoms, or an aryl group having 6 to 20 carbon atoms, provided that when $R_{12}$ and $R_{13}$ form an aryl group having 6 to 20 carbon atoms, $R_{11}$ and $R_{14}$ are not present,
i is an integer of 1 or 2, and
* is a bonding site,

[Formula 2-b]

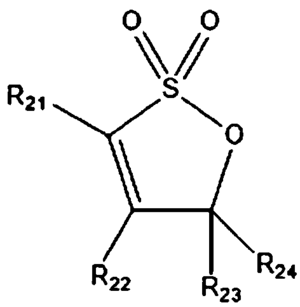

in Formula 2-b above, $R_{21}$, $R_{22}$, $R_{23}$, and $R_{24}$ are each independently hydrogen, an alkyl group having 1 to 10 carbon atoms, an alkylene group having 1 to 10 carbon atoms, an alkynyl group having 1 to 10 carbon atoms, or halogen,

[Formula 2-c]

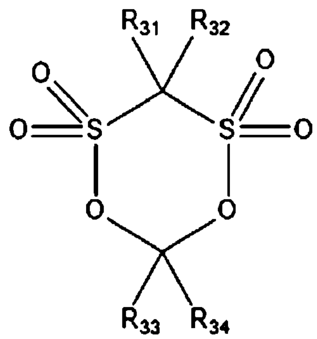

in Formula 2-c above, $R_{31}$, $R_{32}$, $R_{33}$, and $R_{34}$ are each independently hydrogen, an alkyl group having 1 to 10 carbon atoms, an alkylene group having 1 to 10 carbon atoms, an alkynyl group having 1 to 10 carbon atoms, or halogen,

[Formula 2-d]

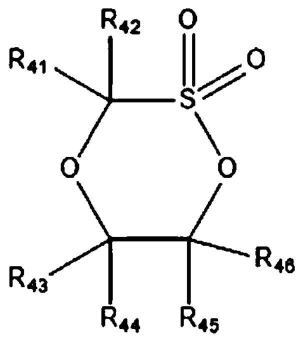

in Formula 2-d above, $R_{41}$, $R_{42}$, $R_{43}$, and $R_{46}$ are each independently hydrogen, an alkyl group having 1 to 10 carbon atoms, an alkylene group having 1 to 10 carbon atoms, an alkynyl group having 1 to 10 carbon atoms, or halogen, and $R_{44}$ and $R_{45}$ are each independently hydrogen, an alkyl group having 1 to 10 carbon atoms, an alkylene group having 1 to 10 carbon atoms, an alkynyl group having 1 to 10 carbon atoms, or halogen, or $R_{44}$ and $R_{45}$ form a fused ring together to provide a cycloalkyl group having 5 to 20 carbon atoms, a cycloalkenyl group having 5 to 20 carbon atoms, a cycloalkynyl group having 5 to 20 carbon atoms, or an aryl group having 6 to 20 carbon atoms, provided that when $R_{44}$ and $R_{45}$ form an aryl group having 6 to 20 carbon atoms, $R_{43}$ and $R_{46}$ are not present,

[Formula 2-e]

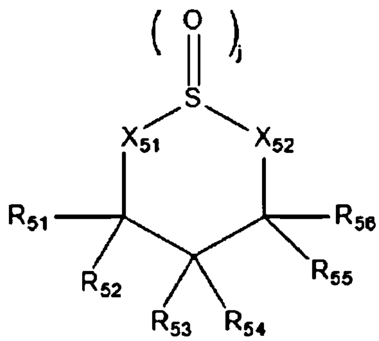

in Formula 2-e above, $X_{51}$ and $X_{52}$ are each independently *-O-* or *-C($R_{X51}$)($R_{X52}$)-*, but both $X_{51}$ and $X_{52}$ are not *-C($R_{X51}$)($R_{X52}$)-*,

$R_{51}$, $R_{52}$, $R_{53}$, $R_{54}$, $R_{55}$, and $R_{56}$ are each independently hydrogen, an alkyl group having 1 to 10 carbon atoms, an alkylene group having 1 to 10 carbon atoms, an alkynyl group having 1 to 10 carbon atoms, or halogen, and

j is an integer of 1 or 2,

[Formula 2-f]

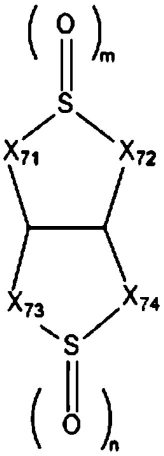

in Formula 2-f above, $X_{71}$ and $X_{72}$ are each independently *-O-* or *-C($R_{X71}$)($R_{X72}$)-*, but both $X_{71}$ and $X_{72}$ are not *-C($R_{X71}$)($R_{X72}$)-*,
$X_{73}$ and $X_{74}$ are each independently *-O-* or *-C($R_{X73}$)($R_{X74}$)-*, but both $X_{73}$ and $X_{74}$ are not *-C($R_{X73}$)($R_{X74}$)-*,
$R_{X71}$, $R_{X72}$, $R_{X73}$, and $R_{X74}$ are each independently be hydrogen, an alkyl group having 1 to 10 carbon atoms, an alkylene group having 1 to 10 carbon atoms, an alkynyl group having 1 to 10 carbon atoms, or halogen,
m and n are each independently an integer of 1 or 2, and
* is a bonding site,

[Formula 2-g]

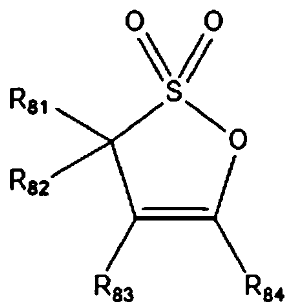

in Formula 2-g above, $R_{81}$, $R_{82}$, $R_{83}$, and $R_{84}$ are each independently hydrogen, an alkyl group having 1 to 10 carbon atoms, an alkylene group having 1 to 10 carbon atoms, an alkynyl group having 1 to 10 carbon atoms, or halogen,

[Formula 3]

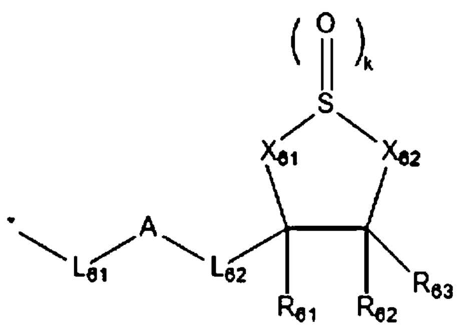

in Formula 3 above, $L_{61}$ and $L_{62}$ are each independently a direct bond or an alkylene group having 1 to 5 carbon atoms,
A is a substituent represented by Formula 4 below,
$X_{61}$ and $X_{62}$ are each independently *-O-* or *-C($R_{X61}$)($R_{X62}$)-*, but both $X_{11}$ and $X_{12}$ are not *-C($R_{X61}$)($R_{X62}$)-*,

$R_{63}$, $R_{X61}$, and $R_{X62}$ are each independently hydrogen, an alkyl group having 1 to 10 carbon atoms, an alkylene group having 1 to 10 carbon atoms, an alkynyl group having 1 to 10 carbon atoms, or halogen,
$R_{61}$ and $R_{62}$ are independently hydrogen, an alkyl group having 1 to 10 carbon atoms, an alkylene group having 1 to 10 carbon atoms, an alkynyl group having 1 to 10 carbon atoms, or a halogen group, or $R_{62}$ and $R_{63}$ form a fused ring together to provide a cycloalkyl group having 5 to 20 carbon atoms, a cycloalkenyl group having 5 to 20 carbon atoms, or a cycloalkynyl group having 5 to 20 carbon atoms,
k is an integer of 1 or 2, and
* is a bonding site,

[Formula 4]

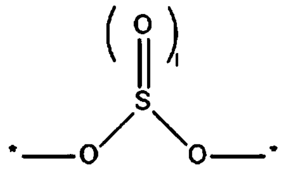

in Formula 4 above, l is an integer of 1 or 2, and * is a bonding site.

[9] The present invention provides the lithium secondary battery according to at least one of [1] to [8] above, wherein the cyclic sulfur oxide-based compound includes at least one selected from the group consisting of compounds represented by Formulas 2-a-1 to 2-a-25, Formula 2-b-1, Formula 2-c-1, Formula 2-d-1, Formula 2-e-1, Formula 2-e-2, Formula 2-f-1, and Formula 2-g-1.

[Formula 2-a-1]

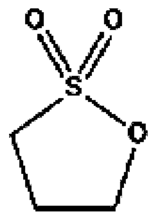

[Formula 2-a-2]

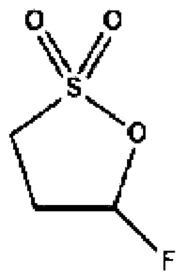

[Formula 2-a-3]

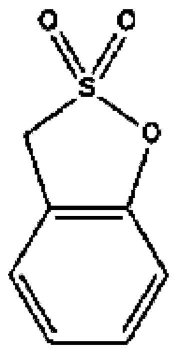

[Formula 2-a-4]

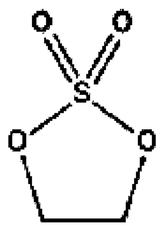

[Formula 2-a-5]

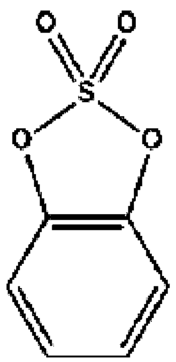

[Formula 2-a-6]

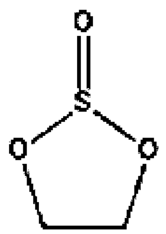

[Formula 2-a-7]

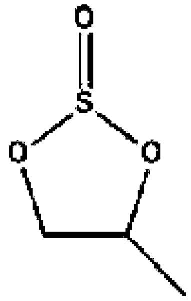

[Formula 2-a-8]

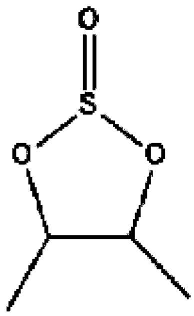

[Formula 2-a-9]

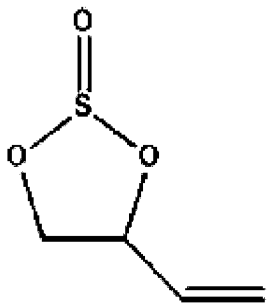

[Formula 2-a-10]

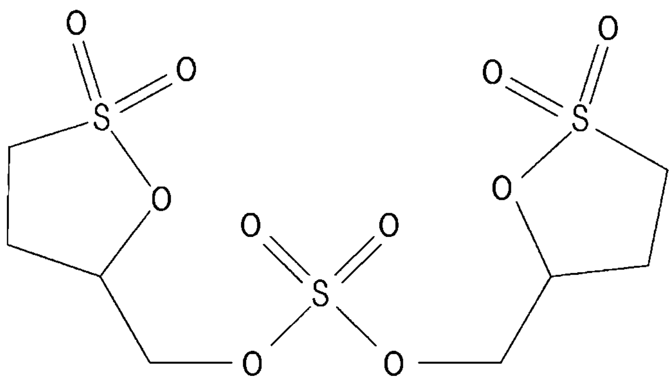

[Formula 2-a-11]

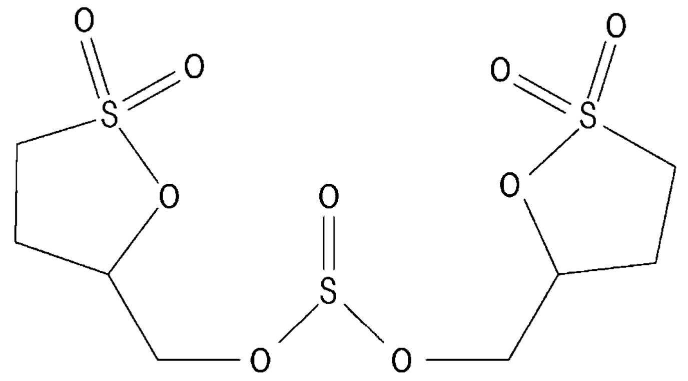

[Formula 2-a-12]

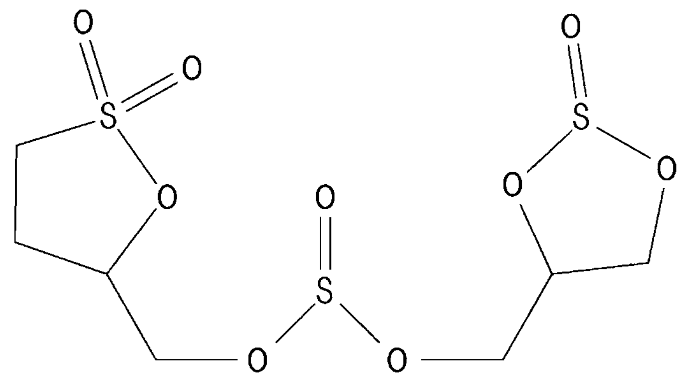

[Formula 2-a-13]

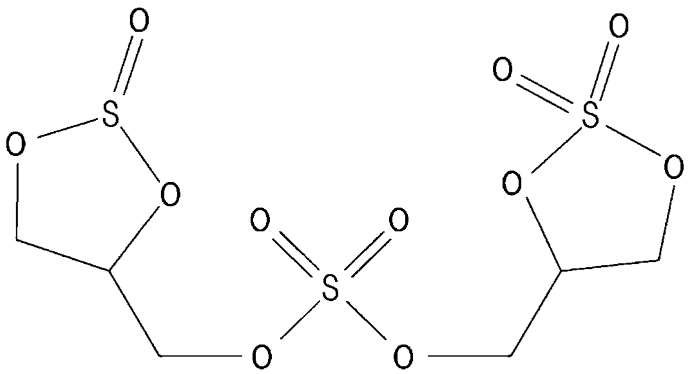

[Formula 2-a-14]

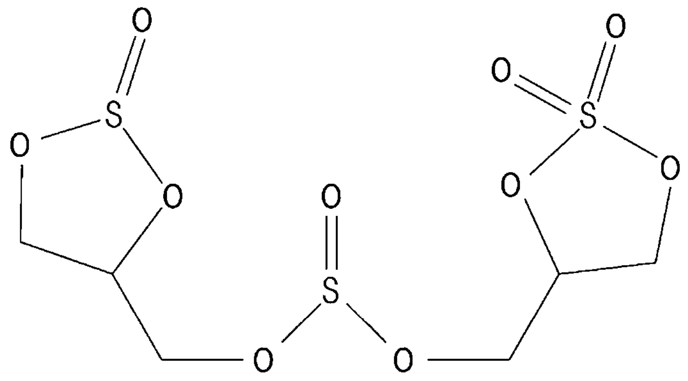

[Formula 2-a-15]

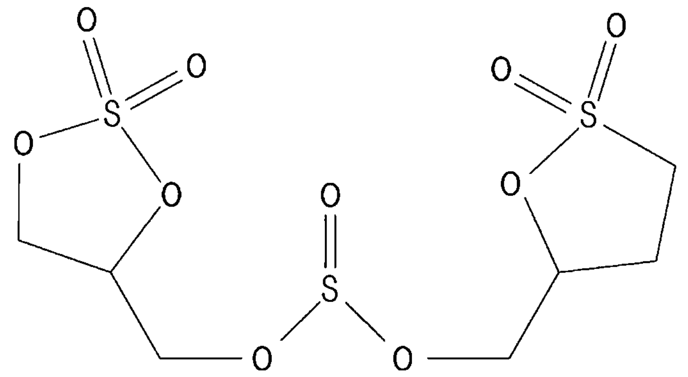

[Formula 2-a-16]

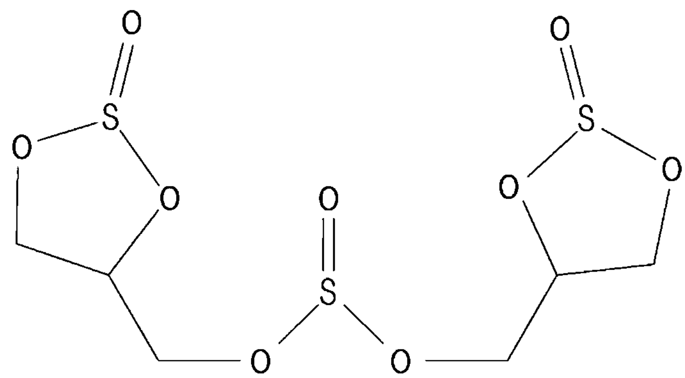

[Formula 2-a-17]

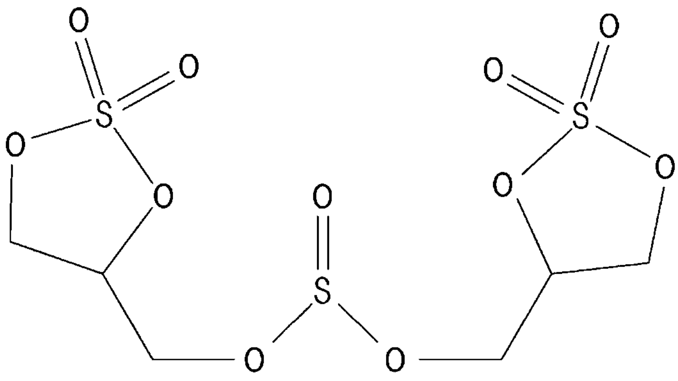

[Formula 2-a-18]

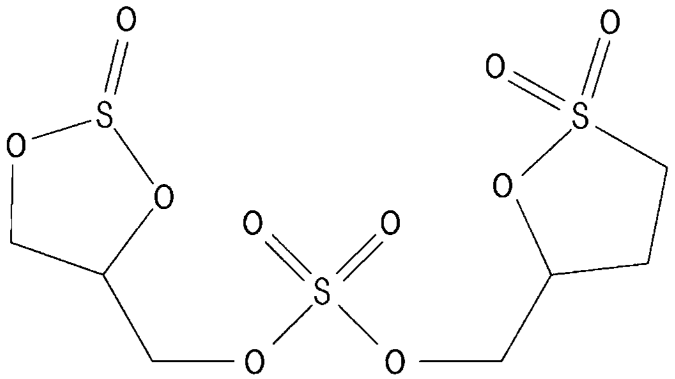

[Formula 2-a-19]

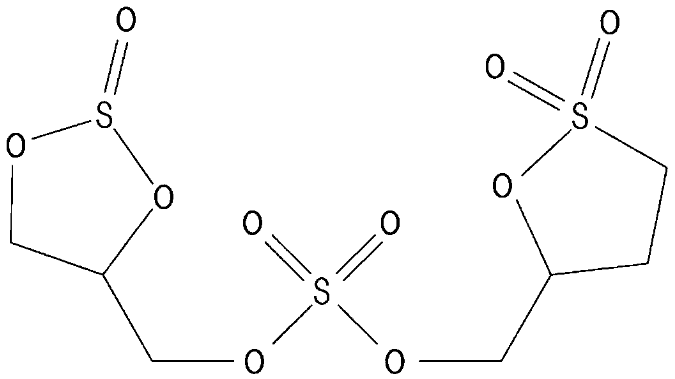

[Formula 2-a-20]

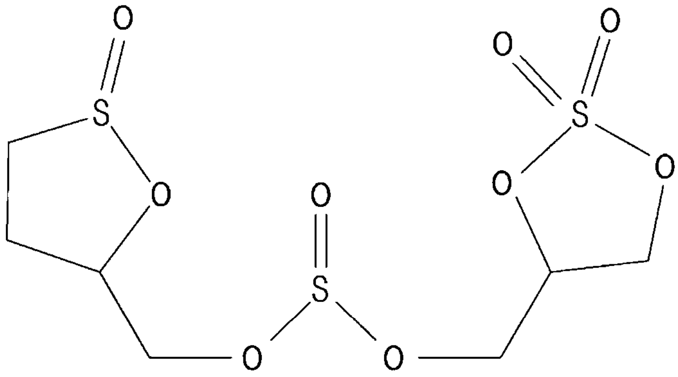

[Formula 2-a-21]

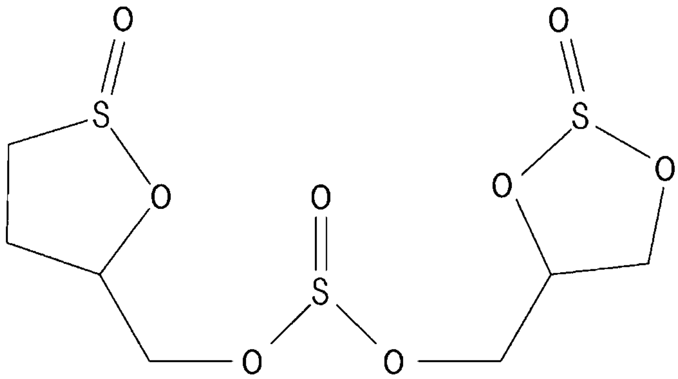

[Formula 2-a-22]

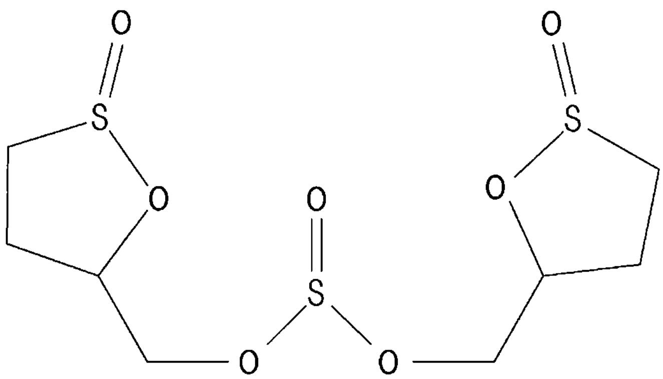

[Formula 2-a-23]

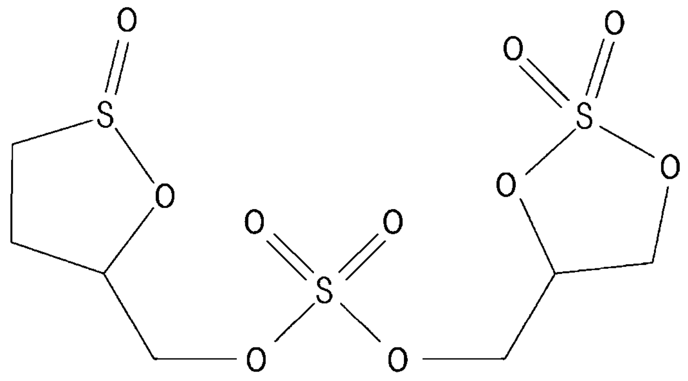

[Formula 2-a-24]

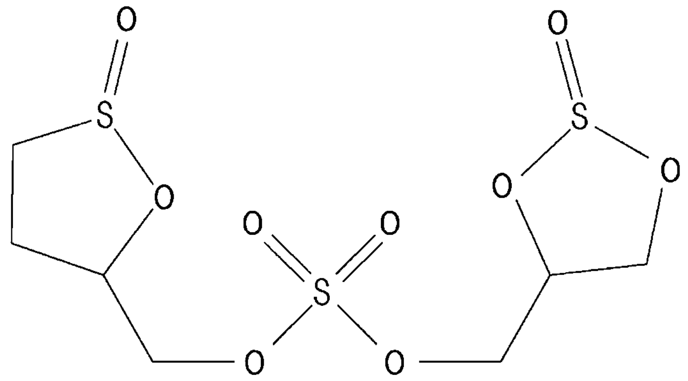

[Formula 2-a-25]

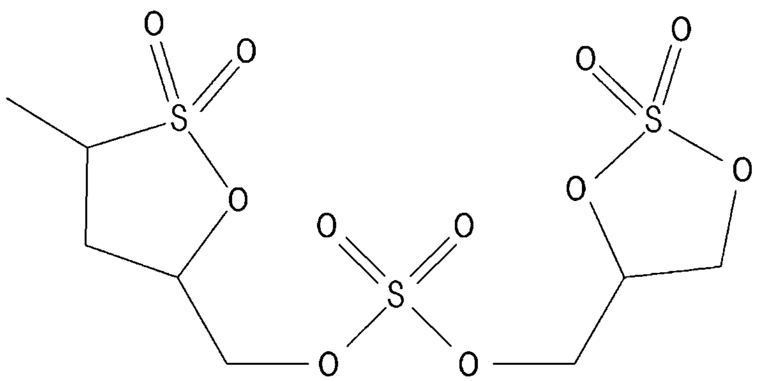

[Formula 2-b-1]

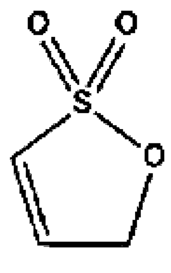

[Formula 2-c-1]

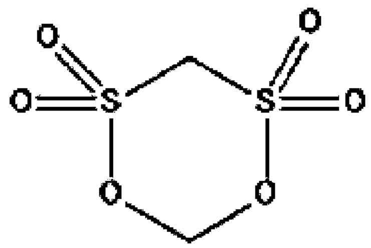

[Formula 2-d-1]

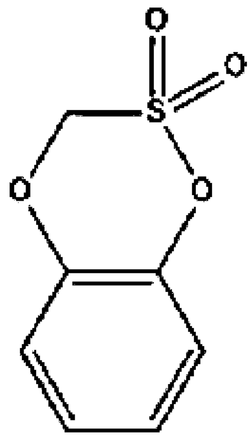

[Formula 2-e-1]

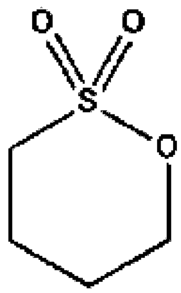

[Formula 2-e-2]

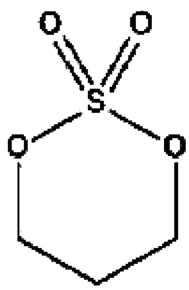

[Formula 2-f-1]

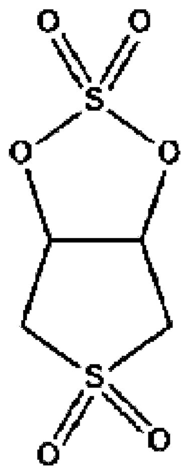

[Formula 2-g-1]

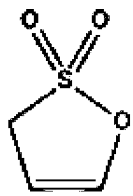

.

[10] The present invention provides the lithium secondary battery according to at least one of [1] to [9] above, wherein the non-aqueous electrolyte includes the second additive in an amount of 0.01 wt% to 10 wt%.

[11] The present invention provides the lithium secondary battery according to at least one of [1] to [10] above, wherein the positive electrode active material includes a lithium composite transition metal oxide represented by Formula A below.

[Formula A] $Li_{1+x}[Ni_aCo_bMn_cM^1{}_d]O_{2+w}$

In Formula A above, $0 \leq x \leq 0.5$, $a+b+c+d = 1$, $0.5 \leq a \leq 0.7$, $0 \leq b \leq 0.15$, $c=1-a-b-d$, $0 \leq d \leq 0.1$, $0 \leq b/a \leq 0.2$, $1 \leq a/c \leq 3$, and $0 \leq w \leq 1$, and

$M^1$ is at least one selected from W, Cu, Fe, V, Cr, Ti, Zr, Zn, Al, In, Ta, Y, La, Sr, Ga, Sc, Gd, Sm, Ca, Ce, Nb, Mg, B, and Mo.

[12] The present invention provides the lithium secondary battery according to at least one of [1] to [11] above, wherein the negative electrode includes a negative electrode active material, and the negative electrode active material includes at least one selected from the group consisting of a carbon-based active material and a silicon-based active material.

## ADVANTAGEOUS EFFECTS

A lithium secondary battery of the present invention includes a nitrogen-containing heteroaromatic compound of a specific formula (Formula 1-1 and/or Formula 1-2) as a first additive in a positive electrode, and includes a cyclic sulfur oxide-based compound as a second additive included in a non-aqueous electrolyte. According to the present invention, with the inclusion of a first additive in a positive electrode, a film that improves oxidation durability is preemptively formed, and through a second additive that may be decomposed through a chemical reaction with the first additive to form an additional film, suppression of oxygen desorption of the positive electrode and interface safety of the positive electrode-non-aqueous electrolyte are ensured, and thus, a lithium secondary battery exhibiting excellent life performance, high-temperature storage performance, and resistance reduction may be achieved. A lithium secondary battery of the present invention may exhibit even more desirable effects, particularly during high voltage operation where electrolyte depletion, gas generation, and oxygen desorption of a positive electrode active material are intensified.

## MODE FOR CARRYING OUT THE INVENTION

It is understood that words or terms used herein and claims of the present invention shall not be construed as being limited to having the meaning defined in commonly used dictionaries. It will be further understood that the words or terms should be interpreted as having meanings that are consistent with their meanings in the context of the relevant art and the technical idea of the invention, based on the principle that an inventor may properly define the meaning of the words or terms to best explain the invention.

Herein, it will be further understood that the terms "include," "comprise," or "have" specify the presence of stated features, numbers, steps, elements, or combinations thereof, but do not preclude the presence or addition of one or more other features, numbers, steps, elements, or combinations thereof.

Meanwhile, prior to describing the present invention, unless otherwise specified in the present invention, "*" indicates a portion connected between ends of the same or different atoms or formulas.

In addition, as used herein, "a" and "b" in the description of "a to b carbon atoms" indicate the number of carbon atoms included in a specific functional group. That is, the functional group may include "a" to "b" carbon atoms. For example, the term "alkyl group having 1 to 5 carbon atoms" indicates an alkyl group including 1 to 5 carbon atoms, that is, $CH_3$-, $CH_3CH_2$-, $CH_3CH_2CH_2$-, $(CH_3)_2CH$-, $CH_3CH_2CH_2CH_2$-, $(CH_3)_2CHCH_2$-, $CH_3CH_2CH_2CH_2CH_2$-, $(CH_3)_2CHCH_2CH_2$-, and the like.

In addition, as used herein, an alkyl group, an alkenyl group, an alkynyl group, an alkoxy group, an aryl group, or a heteroaryl group may all be substituted or unsubstituted. Unless otherwise defined, the term "substituted" indicates that at least one hydrogen bonded to carbon is substituted with an element other than hydrogen, and for example, it means being substituted with an alkyl group having 1 to 20 carbon atoms, an alkenyl group having 2 to 20 carbon atoms, an alkynyl group having 2 to 20 carbon atoms, an alkoxy group having 1 to 20 carbon atoms, a cycloalkyl group having 3 to 12 carbon atoms, a cycloalkenyl group having 3 to 12 carbon atoms, a heterocycloalkyl group having 3 to 12 carbon atoms, a heterocycloalkenyl group having 3 to 12 carbon atoms, a heterocycloalkynyl group having 2 to 12 carbon atoms, an aryloxy group having 6 to 12 carbon atoms, a halogen atom, a fluoroalkyl group having 1 to 20 carbon atoms, a nitro group, an aryl group having 6 to 20 carbon atoms, a heteroaryl group having 2 to 20 carbon atoms, a haloaryl group having 6 to 20 carbon atoms, and the like.

Hereinafter, the present invention will be described in more detail.

## Lithium secondary battery

The present invention relates to a lithium secondary battery.

A lithium secondary battery according to the present invention includes a positive electrode, a negative electrode, a separator placed between the positive electrode and the negative electrode, and a non-aqueous electrolyte, where the positive electrode includes a positive electrode active material and a first additive, the non-aqueous electrolyte includes a lithium salt, an organic solvent, and a second additive, the first additive includes at least one selected from the group consisting of compounds represented by Formula 1-1 and Formula 1-2 below, and the second additive includes a cyclic sulfur oxide-based compound.

[Formula 1-1]

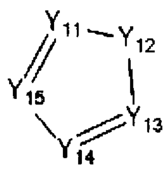

In Formula 1-1 above, $Y_{11}$ is nitrogen (N) or carbon (C) substituted with $R_{Y11}$, $Y_{12}$ is oxygen (O), sulfur (S), nitrogen (N) substituted with $R_{Y121}$, or carbon (C) substituted with $R_{Y122}$ and $R_{Y123}$, $Y_{13}$ is nitrogen (N) or carbon (C) substituted with $R_{Y13}$, $Y_{14}$ is nitrogen (N) or carbon (C) substituted with $R_{Y14}$, and $Y_{15}$ is nitrogen (N) or carbon (C) substituted with $R_{Y15}$, where at least one of $Y_{11}$ or $Y_{15}$ is nitrogen (N) and at least one of $Y_{11}$, $Y_{12}$, $Y_{13}$, $Y_{14}$, or $Y_{15}$ is substituted carbon (C), and $R_{Y11}$, $R_{Y121}$, $R_{Y122}$, $R_{Y123}$, $R_{Y13}$, $R_{Y14}$, and $R_{Y15}$ are each independently selected from hydrogen, an alkyl group having 1 to 3 carbon atoms, and a substituent represented by Formula 1-a below, and at least one of $R_{Y11}$, $R_{Y121}$, $R_{Y122}$, $R_{Y123}$, $R_{Y13}$, $R_{Y14}$, or $R_{Y15}$ is a substituent represented by Formula 1-a above.

[Formula 1-2]

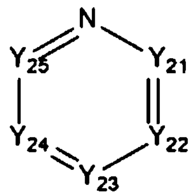

In Formula 1-2 above, $Y_{21}$ is nitrogen (N) or carbon (C) substituted with $R_{Y21}$, $Y_{22}$ is nitrogen (N) or carbon (C) substituted with $R_{Y22}$, $Y_{23}$ is nitrogen (N) or carbon (C) substituted with $R_{Y23}$, $Y_{24}$ is nitrogen (N) or carbon (C) substituted with $R_{Y24}$, and $Y_{25}$ is nitrogen (N) or carbon (C) substituted with $R_{Y25}$, where at least one of $Y_{21}$, $Y_{22}$, $Y_{23}$, $Y_{24}$, or $Y_{25}$ is substituted carbon (C), and $R_{Y21}$, $R_{Y22}$, $R_{Y23}$, $R_{Y24}$, and $R_{Y25}$ are each independently selected from hydrogen, an alkyl group having 1 to 3 carbon atoms, and a substituent represented by Formula 1-a below, and at least one of $R_{Y21}$, $R_{Y22}$, $R_{Y23}$, $R_{Y24}$, or $R_{Y25}$ is a substituent represented by Formula 1-a above.

[Formula 1-a]

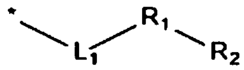

In Formula 1-a above, $L_1$ is selected from a direct bond, ester, ether, and an alkylene group having 1 to 5 carbon atoms, $R_1$ is a direct bond or an alkylene group having 1 to 5 carbon atoms, and $R_2$ is $*-CH=CH_2$ or $*-C\equiv CH$, where * is a bonding site.

A lithium secondary battery of the present invention includes a nitrogen-containing heteroaromatic compound of a specific formula (Formula 1-1 and/or Formula 1-2) as a first additive in a positive electrode, and includes a cyclic sulfur oxide-based compound as a second additive included in a non-aqueous electrolyte. According to the present invention, with the inclusion of a first additive in a positive electrode, a film that improves oxidation durability is preemptively formed, and through a second additive that may be decomposed through a chemical reaction with the first additive to form an additional film, suppression of oxygen desorption of the positive electrode and interface safety of the positive electrode-non-aqueous electrolyte are ensured, and thus, a lithium secondary battery exhibiting excellent life performance, high-temperature storage performance, and resistance reduction may be achieved. A lithium secondary battery of the present invention may exhibit even more desirable effects, particularly during high voltage operation where electrolyte depletion, gas generation, and oxygen desorption of a positive electrode active material are intensified.

The lithium secondary battery includes a negative electrode, a positive electrode, a separator, and a non-aqueous electrolyte. Specifically, the lithium secondary battery includes a negative electrode, a positive electrode facing the negative electrode, a separator interposed between the negative electrode and the positive electrode, and a non-aqueous electrolyte. The lithium secondary battery may be manufactured by inserting an electrode assembly including the negative electrode, the positive electrode facing the negative electrode, the separator interposed between the negative electrode and the positive electrode into a battery case, and then injecting a non-aqueous electrolyte.

**(1) Positive electrode**

The positive electrode includes a positive electrode active material.

The positive electrode active material is a compound capable of reversibly intercalating and deintercalating lithium, and may specifically include a lithium transition metal composite oxide including lithium and at least one transition metal selected from the group consisting of nickel, cobalt, manganese, and aluminum, preferably, a lithium transition metal composite oxide including lithium and transition metal containing nickel, cobalt, and manganese.

For example, the lithium transition metal composite oxide may include lithium-manganese-based oxide (e.g., $LiMnO_2$, $LiMn_2O_4$, etc.), lithium-cobalt-based oxide (e.g., $LiCoO_2$, etc.), lithium-nickel-based oxide (e.g., $LiNiO_2$, etc.), lithium-nickel-manganese-based oxide (e.g., $LiNi_{1-Y}Mn_YO_2$ (where 0<Y<1), $LiMn_{2-z}Ni_zO_4$ (where 0<Z<2), etc.), lithium-nickel-cobalt-based oxide (e.g., $LiNi_{1-Y1}Co_{Y1}O_2$ (where 0<Y1<1), etc.), lithium-manganese-cobalt-based oxide (e.g., $LiCo_{1-Y2}Mn_{Y2}O_2$ (where 0<Y2<1), $LiMn_{2-z1}Co_{z1}O_4$ (where 0<Z1<2), etc.), lithium-nickel-manganese-cobalt-based oxide (e.g., $Li(Ni_pCo_qMn_{r1})O_2$ (where 0<p<1, 0<q<1, 0<r1<1, and p+q+r1=1) or Li $(Ni_{p1}Co_{q1}Mn_{r2})O_4$ (where 0<p1<2, 0<q1<2, 0<r2<2, and p1+q1+r2=2), etc.), or lithium-nickel-cobalt-transition metal (M) oxide (e.g., $Li(Ni_{p2}Co_{q2}Mn_{r3}M_{S2})O_2$ (where M is selected from the group consisting of aluminum (Al), iron (Fe), vanadium (V), chromium (Cr), titanium (Ti), tantalum (Ta), magnesium (Mg), and molybdenum (Mo), and p2, q2, r3, and s2 are each an atomic fraction of independent elements, where 0<p2<1, 0<q2<1, 0<r3<1, 0<S2<1, and p2+q2+r3+S2=1), etc.), and any one thereof or a compound of two or more thereof may be included. Among these, in terms of being able to increase the capacity and stability of a battery, the lithium

transition metal composite oxide may be $LiCoO_2$, $LiMnO_2$, $LiNiO_2$, a lithium nickel-manganese-cobalt oxide (e.g., $Li(Ni_{0.6}Mn_{0.2}Co_{0.2})O_2$, $Li(Ni_{0.5}Mn_{0.3}Co_{0.2})O_2$, $Li(Ni_{0.7}Mn_{0.15}Co_{0.15})O_2$, or $Li(Ni_{0.8}Mn_{0.1}Co_{0.1})O_2$, etc.), or a lithium-nickel-cobalt-aluminum oxide (e.g., $Li(Ni_{0.8}Co_{0.15}Al_{0.05})O_2$, etc.), and the like, and when considering an remarkable improvement effect according to the control of type and content ratio of constituent elements forming a lithium transition metal composite oxide, the lithium transition metal composite oxide may be $Li(Ni_{0.6}Mn_{0.2}Co_{0.2})O_2$, $Li(Ni_{0.5}Mn_{0.3}Co_{0.2})O_2$, $Li(Ni_{0.7}Mn_{0.15}Co_{0.15})O_2$, or $Li(Ni_{0.8}Mn_{0.1}Co_{0.1})O_2$, and the like, and any one thereof or a mixture of two or more thereof may be used.

Specifically, the positive electrode active material may include a lithium transition metal oxide represented by Formula A below.

[Formula A] $Li_{1+x}[Ni_aCo_bMn_cM^1_d]O_{2+w}$

In Formula A above, $0 \leq x \leq 0.5$, a+b+c+d = 1, $0.5 \leq a \leq 0.7$, $0 \leq b \leq 0.15$, c=1-a-b-d, $0 \leq d \leq 0.1$, $0 \leq b/a \leq 0.2$, $1 \leq a/c \leq 3$, and $0 \leq w \leq 1$, and $M^1$ is at least one selected from W, Cu, Fe, V, Cr, Ti, Zr, Zn, Al, In, Ta, Y, La, Sr, Ga, Sc, Gd, Sm, Ca, Ce, Nb, Mg, B, and Mo.

Since the compound represented by Formula A above has a lower content of nickel than a high-nickel lithium transition metal oxide (e.g., a lithium transition metal oxide containing 70 mol% or more of nickel among transition metals), it needs to be operated at a high voltage (e.g., 4.35 V or higher) to increase energy density of the positive electrode, and at the high voltage operation, the positive electrode electrolyte side reactions are intensified, causing degradation in life performance and storage performance. However, the lithium secondary battery according to the present invention may exhibit excellent long-term life performance, reduced resistance, and high-temperature storage performance even at high voltage operation by organically combining a first additive and a second additive, which will be described later.

In Formula A above, x may meet the following condition: $0 \leq x \leq 0.5$, specifically $0 \leq x \leq 0.2$.

In Formula A above, a may meet the following condition: $0.5 \leq a \leq 0.7$, specifically $0.55 \leq a \leq 0.65$.

In Formula A above, b meets the following condition: $0 \leq b \leq 0.15$. b corresponds to a molar percentage of Co among metals excluding lithium in the lithium transition metal oxide represented by Formula A, and according to the present invention, lowering the Co content may provide cost benefits, and relatively increasing the proportion of Mn may improve the structural stability of a positive electrode active material. Specifically, in Formula A above, b may meet the following condition: $0 \leq b \leq 0.1$.

In Formula A above, a and b meet the following condition: $0 \leq b/a \leq 0.2$. Specifically, in Formula A above, a and b may meet the following condition: $0.05 \leq b/a \leq 0.2$.

In Formula A above, a, b, c, and d meet the following conditions: c=1-a-b-d and $1 \leq a/c \leq 3$. c corresponds to a molar percentage of Mn among metals excluding lithium in the lithium transition metal oxide represented by Formula A, and according to the present invention, the molar ratio of Ni to Mn is adjusted to $1 \leq a/c \leq 3$, thereby improving the structural stability of a positive electrode active material. Specifically, a and c may meet the following condition: $1.5 \leq a/c \leq 2.5$.

In Formula A above, $M^1$ may be considered as a doping element of lithium transition metal oxides, and specifically, $M^1$ may be at least one selected from W, Cu, Fe, V, Cr, Ti, Zr, Zn, Al, In, Ta, Y, La, Sr, Ga, Sc, Gd, Sm, Ca, Ce, Nb, Mg, B, and Mo. In this case, d meet the following condition: $0 \leq d \leq 0.1$, specifically $0 \leq d \leq 0.05$.

In Formula A above, $a/(b \times c)$ may be in a range of 18 to 50, specifically 18 to 40, and more specifically 20 to 35. Within the above range, the content of nickel, cobalt, and manganese in Formula A is harmoniously adjusted, thereby achieving both improved performance by forming a positive electrode film through an additive and improved structural stability of a positive electrode active material.

The positive electrode active material may be in the form of particles. Specifically, the positive electrode active material is in the form of a single particle formed of one single nodule or in the form of a quasi-single particle, a composite of 30 or fewer nodules, specifically in the form of a quasi-single particle, a composite of 2 to 20 nodules, more specifically 2 to 10 nodules, or in the form including both the single particle and the quasi-single particle. In this case, particle breakage is prevented when preparing an electrode of the positive electrode active material, and internal cracks caused by volume expansion/contraction of nodules during charge/discharge are prevented, resulting in improved high-temperature lifespan characteristics and high-temperature storage characteristics.

The positive electrode active material may have an average particle diameter ($D_{50}$) of 1 $\mu$m to 10 $\mu$m, specifically 2 $\mu$m to 8 $\mu$m, and more specifically 3 $\mu$m to 7 $\mu$m. When the above range is satisfied, excellent processability in electrode manufacturing may be achieved, enhanced electrolyte impregnation may increase electrochemical properties, and reduced resistance and improved output characteristics may be obtained.

The positive electrode active material may have a specific surface area of 0.1 $m^2/g$ to 3.0 $m^2/g$, specifically 0.3 $m^2/g$ to 2.5 $m^2/g$, and more specifically 0.4 $m^2/g$ to 1.8 $m^2/g$. When the above range is satisfied, the rolling characteristics of an electrode may be improved, and particle breakage may be reduced, thereby suppressing side reactions with an electrolyte.

In addition, the positive electrode includes a first additive.

The first additive may include at least one selected from the group consisting of compounds represented by Formula 1-1 and Formula 1-2 below. Specifically, the first additive may include a compound represented by Formula 1-1 below.

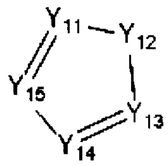

In Formula 1-1 above, $Y_{11}$ is nitrogen (N) or carbon (C) substituted with $R_{Y11}$, $Y_{12}$ is oxygen (O), sulfur (S), nitrogen (N) substituted with $R_{Y121}$, or carbon (C) substituted with $R_{Y122}$ and $R_{Y123}$, $Y_{13}$ is nitrogen (N) or carbon (C) substituted with $R_{Y13}$, $Y_{14}$ is nitrogen (N) or carbon (C) substituted with $R_{Y14}$, and $Y_{15}$ is nitrogen (N) or carbon (C) substituted with $R_{Y15}$, where at least one of $Y_{11}$ or $Y_{15}$ is nitrogen (N) and at least one of $Y_{11}$, $Y_{12}$, $Y_{13}$, $Y_{14}$, or $Y_{15}$ is substituted carbon (C), and $R_{Y11}$, $R_{Y121}$, $R_{Y122}$, $R_{Y123}$, $R_{Y13}$, $R_{Y14}$, and $R_{Y15}$ are each independently selected from hydrogen, an alkyl group having 1 to 3 carbon atoms, and a substituent represented by Formula 1-a below, and at least one of $R_{Y11}$, $R_{Y121}$, $R_{Y122}$, $R_{Y123}$, $R_{Y13}$, $R_{Y14}$, or $R_{Y15}$ is a substituent represented by Formula 1-a above.

[Formula 1-2]

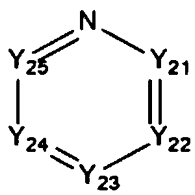

In Formula 1-2 above, $Y_{21}$ is nitrogen (N) or carbon (C) substituted with $R_{Y21}$, $Y_{22}$ is nitrogen (N) or carbon (C) substituted with $R_{Y22}$, $Y_{23}$ is nitrogen (N) or carbon (C) substituted with $R_{Y23}$, $Y_{24}$ is nitrogen (N) or carbon (C) substituted with $R_{Y24}$, and $Y_{25}$ is nitrogen (N) or carbon (C) substituted with $R_{Y25}$, where at least one of $Y_{21}$, $Y_{22}$, $Y_{23}$, $Y_{24}$, or $Y_{25}$ is substituted carbon (C), and $R_{Y21}$, $R_{Y22}$, $R_{Y23}$, $R_{Y24}$, and $R_{Y25}$ are each independently selected from hydrogen, an alkyl group having 1 to 3 carbon atoms, and a substituent represented by Formula 1-a below, and at least one of $R_{Y21}$, $R_{Y22}$, $R_{Y23}$, $R_{Y24}$, or $R_{Y25}$ is a substituent represented by Formula 1-a above.

[Formula 1-a]

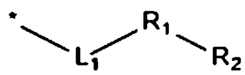

In Formula 1-a above, $L_1$ is selected from a direct bond, ester, ether, and an alkylene group having 1 to 5 carbon atoms, $R_1$ is a direct bond or an alkylene group having 1 to 5 carbon atoms, and $R_2$ is $*\text{-CH=CH}_2$ or $*\text{-C}\equiv\text{CH}$, where * is a bonding site.

In general, in conditions such as charging/discharging and storage of lithium secondary batteries, reactive oxygen desorption of the positive electrode active material, collapse of the positive electrode active material structure due to the reactive oxygen desorption, and elution of transition metals may be induced. This reactive oxygen reacts with an organic solvent of an electrolyte to generate by-products of CO, $CO_2$, and $H_2O$, and in particular, $H_2O$ decomposes lithium salts to generate HF, and the HF facilitates the elution of transition metals and re-desorption of oxygen, resulting in accelerated degradation in life performance and storage performance. In particular, these issues are further intensified at the high voltage operation.

To overcome the limitations, the present invention includes the first additive in the positive electrode. The first additive includes at least one compound selected from the compounds represented by Formula 1-1 and Formula 1-2, and acts as a Lewis base capable of capturing HF, which is a Lewis acid, and may thus block the generation of reactive oxygen by HF. In addition, the compound represented by Formula 1 above contains an unsaturated hydrocarbon group (a substituent represented by Formula 1-a) such as a vinyl group or a propargyl group in the structure, and may thus facilitate the formation of a highly durable positive electrode film.

In addition, in the present invention, the first additive is included in the positive electrode, not in the non-aqueous electrolyte. For example, when the first additive is included in the non-aqueous electrolyte rather than the positive

electrode, it is difficult to achieve the positive electrode film formation effect described above due to reduction and decomposition at the negative electrode, which may cause an undesirable increase in resistance, or consumption of the first additive at the negative electrode.

Meanwhile, simply including the first additive in the positive electrode hardly induces desired high-temperature durability and long-term life performance improvement effects due to increased resistance and reduced structural stability of the positive electrode active material from the absence of formation of a sulfur (S)-based film component. Accordingly, the present invention includes a second additive capable of forming an additional positive electrode film through a chemical reaction with the first additive or a positive electrode film derived therefrom in the non-aqueous electrolyte. Specifically, the non-aqueous electrolyte including the second additive impregnates the positive electrode, and the first additive and the second additive may react with each other in an activation process to form an additional electrode film. In this case, the compound represented by Formula 1-1 and/or the compound represented by Formula 1-2 included in the first additive includes nitrogen (N) having a $sp^2$ hybrid orbital in the structure, and therefore is favorable for reaction with the cyclic sulfur oxide included in the second additive. The electrode film formed through the reaction of the first and second additives is favorable for structural stability of the positive electrode and effective in reducing resistance. The second additive will be described later.

In Formula 1-1, $R_{Y11}$, $R_{Y121}$, $R_{Y122}$, $R_{Y123}$, $R_{Y13}$, $R_{Y14}$, and $R_{Y15}$ may each independently be selected from hydrogen, an alkyl group having 1 to 3 carbon atoms, and a substituent represented by Formula 1-a below. Specifically, in Formula 1-1 above, $R_{Y11}$, $R_{Y121}$, $R_{Y122}$, $R_{Y123}$, $R_{Y13}$, $R_{Y14}$, and $R_{Y15}$ may each independently be selected from hydrogen, a methyl group, and a substituent represented by Formula 1-a below. In this case, at least one of $R_{Y11}$, $R_{Y121}$, $R_{Y122}$, $R_{Y123}$, $R_{Y13}$, $R_{Y14}$, or $R_{Y15}$ may be the substituent represented by Formula 1-a above. Specifically, any one of $R_{Y11}$, $R_{Y121}$, $R_{Y122}$, $R_{Y123}$, $R_{Y13}$, $R_{Y14}$, and $R_{Y15}$ may be a substituent represented by Formula 1-a above, and the others other than the substituents represented by Formula 1-a above may each independently be hydrogen or an alkyl group having 1 to 3 carbon atoms, specifically hydrogen or a methyl group, more specifically hydrogen.

In Formula 1-2 above, $R_{Y21}$, $R_{Y22}$, $R_{Y23}$, $R_{Y24}$, and $R_{Y25}$ may each independently be selected from hydrogen, an alkyl group having 1 to 3 carbon atoms, and a substituent represented by Formula 1-a below. Specifically, $R_{Y21}$, $R_{Y22}$, $R_{Y23}$, $R_{Y24}$, and $R_{Y25}$ may each independently be selected from hydrogen, a methyl group, and a substituent represented by Formula 1-a below. In this case, at least one of $R_{Y21}$, $R_{Y22}$, $R_{Y23}$, $R_{Y24}$, or $R_{Y25}$ may be the substituent represented by Formula 1-a above. Specifically, any one of $R_{Y21}$, $R_{Y22}$, $R_{Y23}$, $R_{Y24}$, and $R_{Y25}$ may be a substituent represented by Formula 1-a above, and the others may each independently be hydrogen or an alkyl group having 1 to 3 carbon atoms, specifically hydrogen or a methyl group, more specifically hydrogen. In this case, hydrogen or an alkyl group having 1 to 3 carbon atoms does not cause steric hindrance and thus does not interfere with the positive electrode film forming effect of the substituent represented by Formula 1-a above or the HF scavenging effect of the nitrogen-containing heteroaromatic compound of Formula 1-1 and/or Formula 1-2.

[Formula 1-a]

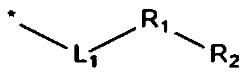

In Formula 1-a above, $L_1$ may be selected from a direct bond, ester, ether, and an alkylene group having 1 to 5 carbon atoms. Specifically, $L_1$ may be a direct bond or ester. More specifically, $L_1$ may be ester. When $L_1$ is an ester (*-C(=O)O-*), the bonding site of the two bonding sites (*) are not particularly limited, but a bonding site adjacent to oxygen is bonded to $R_1$, and a bonding site adjacent to carbonyl carbon is bonded to a bonding site that is not bonded to $R_1$, specifically, $Y_{11}$, $Y_{12}$, $Y_{13}$, $Y_{14}$, or $Y_{15}$; $Y_{21}$, $Y_{22}$, $Y_{23}$, $Y_{24}$, or $Y_{25}$.

$R_1$ may be a direct bond or an alkylene group having 1 to 5 carbon atoms. Specifically, $R_1$ may be a direct bond or an alkylene group having 1 to 3 carbon atoms.

$R_2$ may be $*-CH=CH_2$ or $*-C\equiv CH$, and may specifically be $*-C\equiv CH$.

The compound represented by Formula 1-1 above may include at least one selected from the group consisting of compounds represented by Formula 1-1-A, Formula 1-1-B, Formula 1-1-C, Formula 1-1-D, Formula 1-1-E, and Formula 1-1-F below, and may specifically include a compound represented by Formula 1-1-A below.

[Formula 1-1-A]

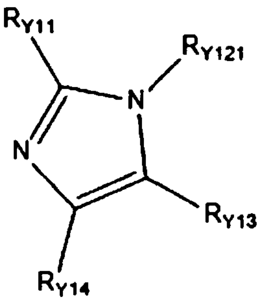

[Formula 1-1-B]

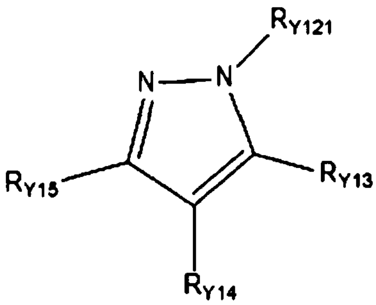

[Formula 1-1-C]

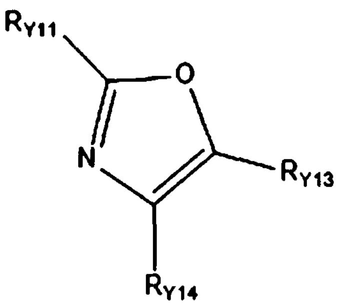

[Formula 1-1-D]

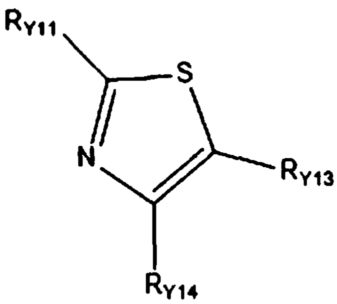

[Formula 1-1-E]

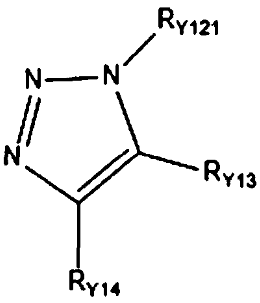

[Formula 1-1-F]

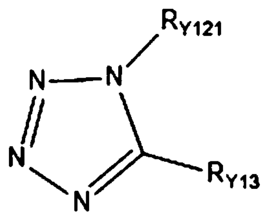

.

In Formula 1-1-A, Formula 1-1-B, Formula 1-1-C, Formula 1-1-D, Formula 1-1-E above, and Formula 1-1-F above, $R_{Y11}$, $R_{Y121}$, $R_{Y122}$, $R_{Y123}$, $R_{Y13}$, $R_{Y14}$, and $R_{Y15}$ are as defined in Formula 1-1.

The compound represented by Formula 1-2 above may include at least one selected from the group consisting of compounds represented by Formula 1-2-A, Formula 1-2-B, Formula 1-2-C, Formula 1-2-D, and Formula 1-2-E below.

[Formula 1-2-A]

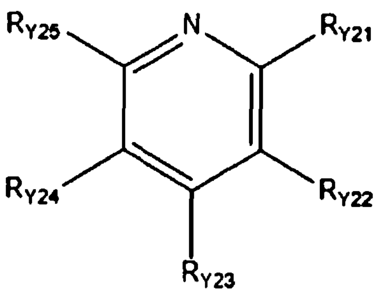

[Formula 1-2-B]

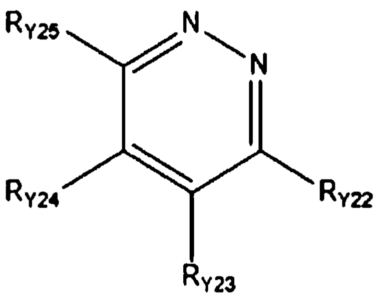

[Formula 1-2-C]

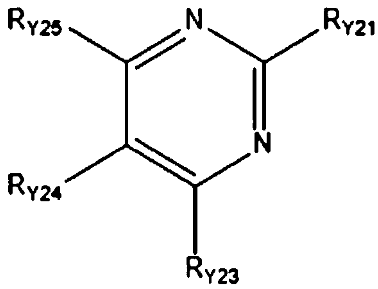

[Formula 1-2-D]

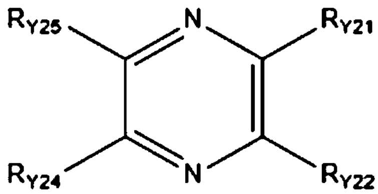

[Formula 1-2-E]

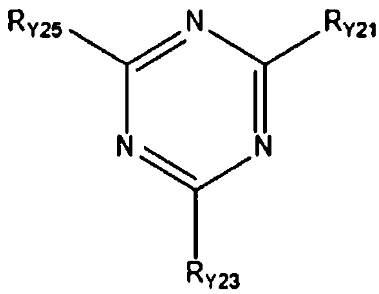

.

In Formula 1-2-A, Formula 1-2-B, Formula 1-2-C, Formula 1-2-D, and Formula 1-2-E above, $R_{Y21}$, $R_{Y22}$, $R_{Y23}$, $R_{Y24}$, and $R_{Y25}$ are as defined in Formula 1-2.

Specifically, the compound represented by Formula 1-1 above may include at least one selected from the group consisting of compounds represented by Formula 1-1-A1 to 1-1-A4 below, and may specifically include a compound represented by Formula 1-1-A1 below.

[Formula 1-1-A1]

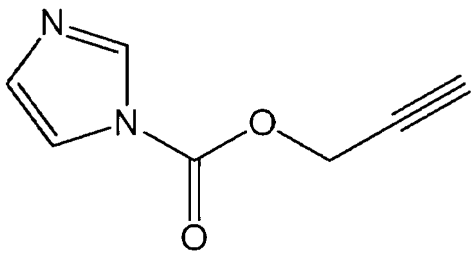

[Formula 1-1-A2]

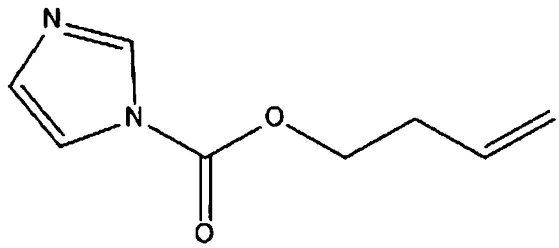

[Formula 1-1-A3]

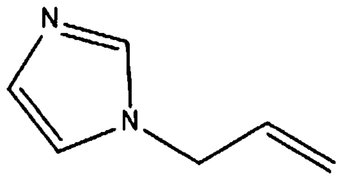

[Formula 1-1-A4]

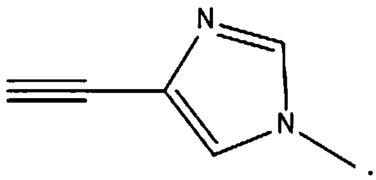

The positive electrode may include the first additive in an amount of 0.004 to 8 parts by weight, specifically 0.04 to 4 parts by weight, and more specifically 0.1 to 2 parts by weight, with respect to 100 parts by weight of the positive electrode active material. Within the above range, the capacity securing effect due to the inclusion of the positive electrode active material may be sufficiently exhibited while the positive electrode film forming effect due to the inclusion of the first additive described above may be preferably achieved.

The positive electrode may include a positive electrode current collector and a positive electrode active material layer disposed on at least one surface of the positive electrode current collector. In this case, the positive electrode active material and the first additive may be included in the positive electrode active material layer.

The positive electrode current collector is not particularly limited as long as it has conductivity without causing chemical changes in batteries. To be specific, the positive electrode current collector may include at least one selected from the group consisting of copper, stainless steel, aluminum, nickel, titanium, fired carbon, and an aluminum-cadmium alloy, and may preferably include aluminum.

The positive electrode current collector may generally have a thickness of 3 $\mu$m to 500 $\mu$m.

The positive electrode collector may have fine irregularities formed on a surface thereof to improve bonding strength of a positive electrode active material. For example, the positive electrode current collector may be used in various forms such as a film, a sheet, a foil, a net, a porous body, a foam body, and a non-woven fabric body.

The positive electrode active material layer may be disposed on at least one surface of the positive electrode current collector, specifically, on one surface or both surfaces of the positive electrode current collector.

The positive electrode active material layer may include the positive electrode active material in an amount of 80 wt% to 99 wt%, preferably 92 wt% to 98.5 wt%, in consideration of exhibiting sufficient capacity of the positive electrode active material.

The positive electrode active material and the first additive are described above, and thus the descriptions thereof will not be provided again.

The positive electrode active material layer may further include a binder and/or a conductive material together with the positive electrode active material and the first additive.

The binder is a component that supports the binding of an active material and a conductive material and the binding to a collector, and may specifically include at least one selected from the group consisting of polyvinylidene fluoride, polyvinyl alcohol, carboxymethyl cellulose (CMC), starch, hydroxypropyl cellulose, regenerated cellulose,

polyvinylpyrrolidone, polytetrafluoroethylene, polyethylene, polypropylene, an ethylene-propylene-diene terpolymer (EPDM), a sulfonated EPDM, styrene-butadiene rubber, and fluorine rubber, and may preferably include polyvinylidene fluoride.

The binder may be included in an amount of 1 wt% to 20 wt%, preferably 1.2 wt% to 10 wt% in the positive electrode active material layer for the purpose of sufficiently securing the binding strength between components such as the positive electrode active material.

The conductive material may be used to support and improve the conductivity of a secondary battery, and is not particularly limited as long as it has conductivity without causing chemical changes in batteries. Specifically, the positive electrode conductive material may include at least one selected the group consisting of graphite such as natural graphite or artificial graphite; carbon black such as acetylene black, Ketjen black, channel black, furnace black, lamp black, and thermal black; conductive fibers such as carbon fibers and metal fibers; conductive tubes such as carbon nanotubes; fluorocarbon; metal powder such as aluminum and nickel powder; conductive whiskers such as zinc oxide and potassium titanate; conductive metal oxides such as titanium oxide; and polyphenylene derivatives, and may preferably include carbon nanotubes for the purpose of improving conductivity.

The conductive material may be included in an amount of 1 wt% to 20 wt%, preferably 1.2 wt% to 10 wt%, in the positive electrode active material layer for the purpose of sufficiently securing electrical conductivity.

The positive electrode active material may have a thickness of 30 $\mu$m to 400 $\mu$m, preferably 40 $\mu$m to 200 $\mu$m.

A positive electrode slurry including a positive electrode active material and optionally a binder, a conductive material, and a solvent for forming a positive electrode slurry may be applied onto the positive electrode current collector, and then dried and roll pressed to prepare the positive electrode.

The solvent for forming a positive electrode slurry may include an organic solvent such as N-methyl-2-pyrrolidone (NMP). The positive electrode slurry may have a solid content of 40 wt% to 90 wt%, specifically 50 wt% to 80 wt%.

(2) Negative electrode

The negative electrode may face the positive electrode.

The negative electrode includes a negative electrode active material.

The negative electrode active material is a material enabling intercalation/deintercalation of lithium ions, and may include at least one selected from the group consisting of carbon-based active materials, (semi-)metal-based active materials, and lithium metal, and specifically may include at least one selected from carbon-based active materials and (semi-)metal-based active materials.

The carbon-based active material may include at least one selected from the group consisting of artificial graphite, natural graphite, hard carbon, soft carbon, carbon black, graphene, and fibrous carbon, and may preferably include at least one selected from the group consisting of artificial graphite and natural graphite.

The carbon-based active material may have an average particle diameter ($D_{50}$) of be 10 $\mu$m to 30 $\mu$m, preferably 15 $\mu$m to 25 $\mu$m, in terms of ensuring structural stability upon charging and discharging and reducing side reactions with an electrolyte.

Specifically, the (semi-)metal-based active material may include at least one (semi-)metal selected from the group consisting of Cu, Ni, Na, K, Rb, Cs, Fr, Be, Mg, Ca, Sr, Si, Sb, Pb, In, Zn, Ba, Ra, Ge, Al, V, Ti, and Sn; an alloy of lithium and at least one (semi-)metal selected from the group consisting of Cu, Ni, Na, K, Rb, Cs, Fr, Be, Mg, Ca, Sr, Si, Sb, Pb, In, Zn, Ba, Ra, Ge, Al, V, Ti, and Sn; oxide of at least one (semi-)metal selected from the group consisting of Cu, Ni, Na, K, Rb, Cs, Fr, Be, Mg, Ca, Sr, Si, Sb, Pb, In, Zn, Ba, Ra, Ge, Al, V, Ti, and Sn; lithium titanium oxide (LTO); and lithium vanadium oxide.

More specifically, the (semi-)metal-based active material may include a silicon-based active material.

The silicon-based active material may include at least one selected from the group consisting of silicon (Si), silicon oxide (which may be indicated as $SiO_x$ ($0<x<2$)), and a silicon-carbon composite.

The silicon-based active material may have an average diameter ($D_{50}$) of 1 $\mu$m to 30 $\mu$m, preferably 2 $\mu$m to 15 $\mu$m, in terms of ensuring structural stability upon charging and discharging and reducing side reactions with an electrolyte.

The negative electrode may include a negative electrode current collector and a negative electrode active material layer disposed on at least one surface of the negative electrode current collector. In this case, the negative electrode active material may be included in the negative electrode active material layer.

The negative electrode current collector is not particularly limited as long as it has conductivity without causing chemical changes in batteries. Specifically, copper, stainless steel, aluminum, nickel, titanium, fired carbon, or copper or stainless steel that is surface-treated with carbon, nickel, titanium, silver, or the like may be used as the negative electrode current collector.

The negative electrode current collector may generally have a thickness of 3 $\mu$m to 500 $\mu$m.

The negative electrode current collector may have fine irregularities formed on a surface thereof to improve bonding strength of a negative electrode active material. For example, the negative electrode current collector may be

used in various forms such as a film, a sheet, a foil, a net, a porous body, a foam body, and a non-woven fabric body.

The negative electrode active material layer may be disposed on at least one surface of the negative electrode current collector, specifically, on one surface or both surfaces of the negative electrode current collector.

The negative electrode active material layer may include the negative electrode active material in an amount of 60 wt% to 99 wt%, preferably 75 wt% to 95 wt%.

The negative electrode active material layer may further include a binder and a conductive material, along with the negative electrode active material.

The binder is used to improve the performance of batteries through improved adhesion between the negative electrode active material layer and the negative electrode current collector, and may include, for example, at least any one selected from the group consisting of a polyvinylidene fluoride-hexafluoropropylene copolymer (PVDF-co-HFP), polyvinylidene fluoride (PVDF), polyacrylonitrile, polymethylmethacrylate, polyvinyl alcohol, carboxymethylcellulose (CMC), starch, hydroxypropylcellulose, regenerated cellulose, polyvinylpyrrolidone, polytetrafluoroethylene, polyethylene, polypropylene, polyacrylic acid, an ethylene-propylene-diene monomer (EPDM), a sulfonated EPDM, styrene butadiene rubber (SBR), fluorine rubber, and a material in which hydrogen thereof is substituted with Li, Na, or Ca, or may also include various copolymers thereof.

The negative electrode active material layer may include the binder in an amount of 0.5 wt% to 10 wt%, preferably, 1 wt% to 5 wt%.

The conductive material is not particularly limited as long as it has conductivity without causing chemical changes in batteries, and, for example, a conductive material, such as: graphite such as natural graphite or artificial graphite; carbon black such as acetylene black, Ketjen black (KETJENBLACK®), channel black, furnace black, lamp black, and thermal black; conductive fibers such as carbon fibers or metal fibers; conductive tubes such as carbon nanotubes; fluorocarbon; metal powder such as nickel powder; conductive whiskers such as zinc oxide whiskers and potassium titanate whiskers; conductive metal oxide such as titanium oxide; or polyphenylene derivatives, may be used.

The negative electrode active material layer may include the conductive material in an amount of 0.5 wt% to 10 wt%, preferably, 1 wt% to 5 wt%.

The negative electrode active material layer may have a thickness of 10 $\mu$m to 200 $\mu$m, preferably 20 $\mu$m to 150 $\mu$m.

A negative electrode slurry including a negative electrode active material and/or a binder, a conductive material, and a solvent for forming a negative electrode slurry may be applied onto at least one surface of the negative electrode current collector, and the dried and roll pressed to prepare the negative electrode.

The solvent for forming the negative electrode slurry may include at least one selected from the group consisting of distilled water, N-methyl-2-pyrrolidone (NMP), ethanol, methanol, and isopropyl alcohol, preferably distilled water, in terms of facilitating the dispersion of, for example, the negative electrode active material, the binder and/or the conductive material. The negative electrode slurry may have a solid content of 30 wt% to 80 wt%, specifically 40 wt% to 70 wt%.

**(3) Separator**

The separator may be interposed between the positive electrode and the negative electrode.

A typically used porous polymer film, for example, a porous polymer film prepared from a polyolefin-based polymer, such as an ethylene homopolymer, a propylene homopolymer, an ethylene/butene copolymer, an ethylene/hexene copolymer, and an ethylene/methacrylate copolymer, may be used alone or in a lamination therewith as the separator. Also, a typical porous nonwoven fabric, for example, a nonwoven fabric formed of high melting point glass fibers or polyethylene terephthalate fibers may be used, but the present invention is not limited thereto. Furthermore, a coated separator including a ceramic component or a polymer component may be used to secure heat resistance or mechanical strength, and the separator having a single layer or multilayer structure may be used.

**(4) Non-aqueous electrolyte**

The non-aqueous electrolyte includes a lithium salt, an organic solvent, and a second additive,

1) Lithium salt

As a lithium salt used in the present invention, various lithium salts commonly used in non-aqueous electrolytes for lithium secondary batteries may be used without limitation. For example, the lithium salt may include $Li^+$ as a cation, and may include at least any one selected from the group consisting of $F^-$, $Cl^-$, $Br^-$, $I^-$, $NO_3^-$, $N(CN)_2^-$, $BF_4^-$, $ClO_4^-$, $AlO_4^-$, $AlCl_4^-$, $PF_6^-$, $SbF_6^-$, $AsF_6^-$, $B_{10}Cl_{10}^-$, $BF_2C_2O_4^-$, $BC_4O_8^-$, $PF_4C_2O_4^-$, $PF_2C_4O_8^-$, $(CF_3)_2PF_4^-$, $(CF_3)_3PF_3^-$, $(CF_3)_4PF_2^-$, $(CF_3)_5PF^-$, $(CF_3)_6P^-$, $CF_3SO_3^-$, $C_4F_9SO_3^-$, $CF_3CF_2SO_3^-$, $(FSO_2)_2N^-$, $CF_3CF_2(CF_3)_2CO^-$, $(CF_3SO_2)_2CH^-$, $CH_3SO_3^-$, $CF_3(CF_2)_7SO_3^-$, $CF_3CO_2^-$, $CH_3CO_2^-$, $SCN^-$, and $(CF_3CF_2SO_2)_2N^-$.

Specifically, the lithium salt may include at least one selected from the group consisting of LiCl, LiBr, LiI, $LiBF_4$, $LiClO_4$, $LiAlO_4$, $LiAlCl_4$, $LiPF_6$, $LiSbF_6$, $LiAsF_6$, $LiB_{10}Cl_{10}$, LiBOB ($LiB(C_2O_4)_2$), $LiCF_3SO_3$, LiFSI ($LiN(SO_2F)_2$), $LiCH_3SO_3$, $LiCF_3CO_2$, $LiCH_3CO_2$, and LiBETI ($LiN(SO_2CF_2CF_3)_2$). Specifically, the lithium salt may include at least one selected from the group consisting of $LiBF_4$, $LiClO_4$, $LiPF_6$, LiBOB ($LiB(C_2O_4)_2$), $LiCF_3SO_3$, LiTFSI ($LiN(SO_2CF_3)_2$), LiFSI (($LiN(SO_2F)_2$), and LiBETI ($LiN(SO_2CF_2CF_3)_2$).

The non-aqueous electrolyte may include the lithium salt at a concentration of 0.5 M to 5 M, specifically 0.8 M to 4 M, and more specifically 0.8 M to 2.0 M. When the concentration of the lithium salt satisfies the above range, lithium ion yield ($Li^+$ transference number) and the dissociation degree of lithium ions are improved, and accordingly, batteries may have improved output characteristics.

2) Organic solvent

An organic solvent is a non-aqueous solvent commonly used in lithium secondary batteries, and is not particularly limited as long as its decomposition due to an oxidation reaction or the like may be minimized in the charging/discharging process of secondary batteries.

Specifically, the organic solvent may include at least one selected from the group consisting of a cyclic carbonate-based organic solvent, a linear carbonate-based organic solvent, a linear ester-based organic solvent, and a cyclic ester-based organic solvent.

Specifically, the organic solvent may include a cyclic carbonate-based organic solvent, a linear carbonate-based organic solvent, or a mixture thereof.

The cyclic carbonate-based organic solvent is an organic solvent which may well dissociate lithium salt in an electrolyte due to high dielectric constant as a highly viscous organic solvent, and specifically may include at least one organic solvent selected from the group consisting of ethylene carbonate (EC), fluoroethylene carbonate (FEC), propylene carbonate (PC), 1,2-butylene carbonate, 2,3-butylene carbonate, 1,2-pentylene carbonate, 2,3-pentylene carbonate, and vinylene carbonate, and may more specifically include at least one selected from the group consisting of ethylene carbonate (EC) and fluoroethylene carbonate (FEC), and may even more specifically include ethylene carbonate (EC).

The linear carbonate organic solvent is an organic solvent having low viscosity and low dielectric constant, and may specifically include at least one selected from the group consisting of dimethyl carbonate (DMC), diethyl carbonate (DEC), dipropyl carbonate, ethylmethyl carbonate (EMC), methylpropyl carbonate, and ethylpropyl carbonate, and may more specifically include at least one selected from the group consisting of ethylmethyl carbonate (EMC) and diethyl carbonate (DEC), and may even more specifically include ethylmethyl carbonate (EMC) and diethyl carbonate (DEC). When the linear carbonate organic solvent includes ethylmethyl carbonate (EMC) and diethyl carbonate (DEC), the ethylmethyl carbonate (EMC) and the diethyl carbonate (DEC) may be present at a volume ratio of 50:50 to 90:10, specifically 80:20 to 90:10, and more specifically 85:15 to 90:10.

The organic solvent may be a mixture of a cyclic carbonate-based organic solvent and a linear carbonate-based organic solvent. In this case, the cyclic carbonate-based organic solvent and the linear carbonate-based organic solvent may be mixed in a volume ratio of 5:95 to 40:60, specifically a volume ratio of 10:90 to 30:70. When the mixing ratio of the cyclic carbonate-based organic solvent and the linear carbonate-based organic solvent satisfies the above range, both high dielectric constant and low viscosity are satisfied, and excellent ionic conductivity may be achieved.

In addition, in order to prepare an electrolyte having high ionic conductivity, the organic solvent may further include at least one ester-based organic solvent selected from the group consisting of a linear ester-based organic solvent and a cyclic ester-based organic solvent, along with at least one carbonate-based organic solvent selected from the group consisting of the cyclic carbonate-based organic solvent and the linear carbonate-based organic solvent.

The linear ester-based organic solvent may specifically include at least one selected from the group consisting of methyl acetate, ethyl acetate, propyl acetate, methyl propionate, ethyl propionate, propyl propionate, and butyl propionate.

In addition, the cyclic ester-based solvent may specifically include at least one selected from the group consisting of γ-butyrolactone, γ-valerolactone, γ-caprolactone, o-valerolactone, and ε-caprolactone.

Meanwhile, the organic solvent may be used by adding an organic solvent commonly used in a non-aqueous electrolyte without limitation, when needed. For example, at least one organic solvent selected from an ether-based organic solvent, a glyme-based solvent, and a nitrile-based organic solvent may be further included.

As the ether-based solvent, any one selected from the group consisting of dimethyl ether, diethyl ether, dipropyl ether, methylethyl ether, methylpropyl ether, ethylpropyl ether, 1,3-dioxolane (DOL), and 2,2-bis(trifluoromethyl)-1,3-dioxolane (TFDOL), or a mixture of two or more thereof may be used, but is the embodiment is not limited thereto.

The glyme-based solvent, as a solvent having higher dielectric constant and a lower surface tension than a linear carbonate-based organic solvent, and being less reactive with metal, may include at least one selected from the group consisting of dimethoxyethane (glyme, DME), diethoxyethane, digylme, tri-glyme, and tetra-glyme (TEGDME), but is not

limited thereto.

The nitrile-based solvent may include at least one selected from the group consisting of acetonitrile, propionitrile, butyronitrile, valeronitrile, caprylonitrile, heptanenitrile, cyclopentane carbonitrile, cyclohexane carbonitrile, 2-fluorobenzonitrile, 4-fluorobenzonitrile, difluorobenzonitrile, trifluorobenzonitrile, phenylacetonitrile, 2-fluorophenylacetonitrile, 4-fluorophenylacetonitrile, and the like, but is not limited thereto.

4) Additive

The non-aqueous electrolyte includes a second additive.

The second additive includes cyclic sulfur oxide. The cyclic sulfur oxide may form an additional positive electrode film through a chemical reaction with the first additive or the positive electrode film derived therefrom. Specifically, the nitrogen-containing heteroaromatic compound in the first additive or the positive electrode film component derived therefrom may form an additional positive electrode film that may improve high-temperature durability and long-term life performance of the positive electrode by ring-opening the cyclic sulfur oxide-based compound. In addition, the compound of Formula 1-1 and/or Formula 1-2 included in the first additive contains nitrogen having a $sp^2$ hybrid orbital in the structure, and thus, the reaction with the cyclic sulfur oxide may be stably induced.

In the present invention, particularly, the first additive is included in the positive electrode and the second additive is included in the non-aqueous electrolyte, and accordingly, the film formation of the positive electrode may be well performed without issues such as unnecessary consumption due to reduction at the negative electrode or increased negative electrode resistance. For example, when both the first additive and the second additive are included in the non-aqueous electrolyte, the first additive and the second additive are consumed by reaction during negative electrode reduction, and thus, the effect of improving high-temperature durability from enhanced film of the positive electrode may not be achieved. In addition, when both the first additive and the second additive are included in the positive electrode, the viscosity of a slurry containing the additives increases during the manufacture of the positive electrode, resulting in poor electrode quality. Meanwhile, when the second additive is included in the positive electrode and the first additive is included in the non-aqueous electrolyte, uneven formation of a film on a surface of the positive electrode active material occurs due to side reactions with Li by-products.

The cyclic sulfur oxide may include, for example, propane sultone, propene sultone, ethylene sulfate, ethylene sulfite, and methylene methane disulfonate in the structure.

Specifically, the cyclic sulfur oxide may include at least one selected from the group consisting of compounds represented by Formula 2-a, Formula 2-b, Formula 2-c, Formula 2-d, Formula 2-e, Formula 2-f, and Formula 2-g below. More specifically, the cyclic sulfur oxide may include a compound represented by Formula 2-a below.

[Formula 2-a]

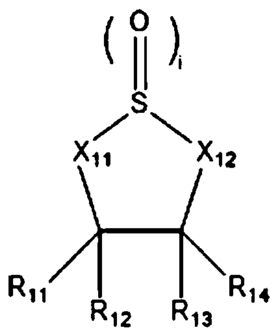

In Formula 2-a above, $X_{11}$ and $X_{12}$ are each independently *-O-* or *-C($R_{X11}$)($R_{X12}$)-*, but both $X_{11}$ and $X_{12}$ are not *-C($R_{X11}$)($R_{X12}$)-*, $R_{11}$, $R_{14}$, $R_{X11}$, and $R_{X12}$ are each independently hydrogen, an alkyl group having 1 to 10 carbon atoms, an alkylene group having 1 to 10 carbon atoms, an alkynyl group having 1 to 10 carbon atoms, or halogen, $R_{12}$ and $R_{13}$ are each independently hydrogen, an alkyl group having 1 to 10 carbon atoms, an alkylene group having 1 to 10 carbon atoms, an alkynyl group having 1 to 10 carbon atoms, a halogen group, or a substituent represented by Formula 3 below, or $R_{12}$ and $R_{13}$ form a fused ring together to provide a cycloalkyl group having 5 to 20 carbon atoms, a cycloalkenyl group having 5 to 20 carbon atoms, a cycloalkynyl group having 5 to 20 carbon atoms, or an aryl group having 6 to 20 carbon atoms, provided that when $R_{12}$ and $R_{13}$ form an aryl group having 6 to 20 carbon atoms, $R_{11}$ and $R_{14}$ are not present, i is an integer of 1 or 2, and * is a bonding site.

[Formula 3]

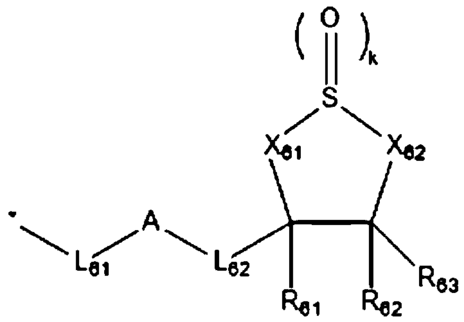

In Formula 3 above, $L_{61}$ and $L_{62}$ are each independently a direct bond or an alkylene group having 1 to 5 carbon atoms, A is a substituent represented by Formula 4 below, $X_{61}$ and $X_{62}$ are each independently *-O-* or *-C($R_{X61}$)($R_{X62}$)-*, but both $X_{11}$ and $X_{12}$ are not *-C($R_{X61}$)($R_{X62}$)-*, $R_{63}$, $R_{X61}$, and $R_{X62}$ are each independently hydrogen, an alkyl group having 1 to 10 carbon atoms, an alkylene group having 1 to 10 carbon atoms, an alkynyl group having 1 to 10 carbon atoms, or halogen, $R_{61}$ and $R_{62}$ are independently hydrogen, an alkyl group having 1 to 10 carbon atoms, an alkylene group having 1 to 10 carbon atoms, an alkynyl group having 1 to 10 carbon atoms, or a halogen group, or $R_{62}$ and $R_{63}$ form a fused ring together to provide a cycloalkyl group having 5 to 20 carbon atoms, a cycloalkenyl group having 5 to 20 carbon atoms, or a cycloalkynyl group having 5 to 20 carbon atoms, k is an integer of 1 or 2, and * is a bonding site.

[Formula 4]

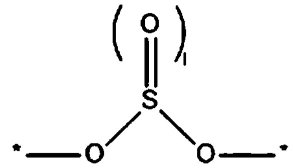

In Formula 4, 1 is an integer of 1 or 2, and * is a bonding site.

In Formula 2-a above, $X_{11}$ and $X_{12}$ are each independently *-O-* or *-C($R_{X11}$)($R_{X12}$)-*, but both $X_{11}$ and $X_{12}$ are not *-C($R_{X11}$)($R_{X12}$)-*, For example, $X_{11}$ and $X_{12}$ both may be *-O-*, or $X_{11}$ may be *-C($R_{X11}$)($R_{X12}$)-*, and $X_{12}$ may be *-O-*.

$R_{11}$, $R_{14}$, $R_{X11}$, and $R_{X12}$ may each independently be selected from hydrogen, an alkyl group having 1 to 10 carbon atoms, an alkylene group having 1 to 10 carbon atoms, an alkynyl group having 1 to 10 carbon atoms, and halogen (which may be F, Cl, Br, or I), and specifically may each independently be selected from hydrogen, a methyl group, *-CH=$CH_2$, *-C=CH, and fluorine (F).

$R_{12}$ and $R_{13}$ may each independently be hydrogen, an alkyl group having 1 to 10 carbon atoms, an alkylene group having 1 to 10 carbon atoms, an alkynyl group having 1 to 10 carbon atoms, and a halogen group, and specifically may each independently be hydrogen, a methyl group *-CH=$CH_2$, *-C=CH, or fluorine (F).

Alternatively, $R_{12}$ and $R_{13}$ may form a fused ring together to provide a cycloalkyl group having 5 to 20 carbon atoms, a cycloalkenyl group having 5 to 20 carbon atoms, a cycloalkynyl group having 5 to 20 carbon atoms, or an aryl group having 6 to 20 carbon atoms. In this case, when $R_{12}$ and $R_{13}$ form an aryl group having 6 to 20 carbon atoms, $R_{11}$ and $R_{14}$ are not present. For example, when $R_{12}$ and $R_{13}$ form a fused ring together, they may form a benzene group, and in this case, $R_{11}$ and $R_{14}$ may not be present.

Alternatively, $R_{12}$ and $R_{13}$ may each independently be a substituent represented by Formula 3 above. In Formula 3 above, $L_{61}$ and $L_{62}$ may each independently be a direct bond or an alkylene group having 1 to 5 carbon atoms, specifically, each independently a direct bond or an alkylene group having 1 to 3 carbon atoms, more specifically, each independently a direct bond or a methylene group, and even more specifically, each a methylene group.

$X_{61}$ and $X_{62}$ may each independently be *-O-* or *-C($R_{X61}$)($R_{X62}$)-*, but both $X_{11}$ and $X_{12}$ may not be *-C($R_{X61}$)($R_{X62}$)-*. For example, $X_{61}$ and $X_{62}$ both may be *-O-*, or $X_{61}$ may be *-C($R_{X61}$)($R_{X62}$)-*, and $X_{62}$ may be *-O-*.

$R_{63}$, $R_{X61}$, and $R_{X62}$ may each independently be hydrogen, an alkyl group having 1 to 10 carbon atoms, an alkylene group having 1 to 10 carbon atoms, an alkynyl group having 1 to 10 carbon atoms, or halogen, and specifically, may each independently be hydrogen, a methyl group *-CH=$CH_2$, *-C=CH, or fluorine (F).

$R_{61}$ and $R_{62}$ may each independently be hydrogen, an alkyl group having 1 to 10 carbon atoms, an alkylene group having 1 to 10 carbon atoms, an alkynyl group having 1 to 10 carbon atoms, and a halogen group, and specifically may each independently be hydrogen, a methyl group *-CH=$CH_2$, *-C=CH, or fluorine (F).

Alternatively, $R_{62}$ and $R_{63}$ may form a fused ring to provide a cycloalkyl group having 5 to 20 carbon atoms, a cycloalkenyl group having 5 to 20 carbon atoms, or a cycloalkynyl group having 5 to 20 carbon atoms.

[Formula 2-b]

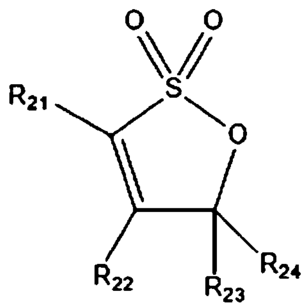

In Formula 2-b above, $R_{21}$, $R_{22}$, $R_{23}$, and $R_{24}$ may each independently be hydrogen, an alkyl group having 1 to 10 carbon atoms, an alkylene group having 1 to 10 carbon atoms, an alkynyl group having 1 to 10 carbon atoms, or halogen. Specifically, $R_{21}$, $R_{22}$, $R_{23}$, and $R_{24}$ may each independently be hydrogen, a methyl group *-CH=CH$_2$, *-C=CH, or fluorine (F).

[Formula 2-c]

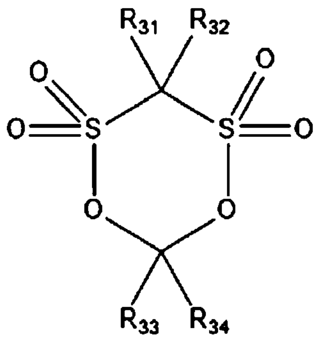

In Formula 2-c above, $R_{31}$, $R_{32}$, $R_{33}$, and $R_{34}$ may each independently be hydrogen, an alkyl group having 1 to 10 carbon atoms, an alkylene group having 1 to 10 carbon atoms, an alkynyl group having 1 to 10 carbon atoms, or halogen. Specifically, $R_{31}$, $R_{32}$, $R_{33}$, and $R_{34}$ may each independently be hydrogen, a methyl group *-CH=CH$_2$, *-C=CH, or fluorine (F).

[Formula 2-d]

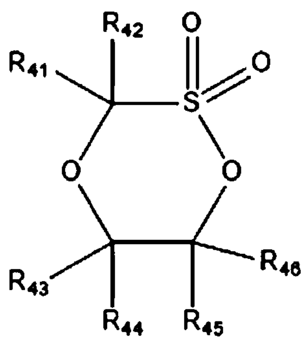

in Formula 2-d above, $R_{41}$, $R_{42}$, $R_{43}$, and $R_{46}$ are each independently hydrogen, an alkyl group having 1 to 10 carbon atoms, an alkylene group having 1 to 10 carbon atoms, an alkynyl group having 1 to 10 carbon atoms, or halogen. Specifically, $R_{41}$, $R_{42}$, $R_{43}$, and $R_{46}$ may each independently be hydrogen, a methyl group *-CH=CH$_2$, *-C=CH, or fluorine (F).

$R_{44}$ and $R_{45}$ are each independently hydrogen, an alkyl group having 1 to 10 carbon atoms, an alkylene group

having 1 to 10 carbon atoms, an alkynyl group having 1 to 10 carbon atoms, or halogen, or $R_{44}$ and $R_{45}$ form a fused ring together to provide a cycloalkyl group having 5 to 20 carbon atoms, a cycloalkenyl group having 5 to 20 carbon atoms, a cycloalkynyl group having 5 to 20 carbon atoms, or an aryl group having 6 to 20 carbon atoms, provided that when $R_{44}$ and $R_{45}$ form an aryl group having 6 to 20 carbon atoms, $R_{43}$ and $R_{46}$ are not present.

Specifically, $R_{44}$ and $R_{45}$ may each independently be hydrogen, a methyl group *-CH=$CH_2$, *-C=CH, or fluorine (F).

Alternatively, $R_{44}$ and $R_{45}$ may form a fused ring together to provide a cycloalkyl group having 5 to 20 carbon atoms, a cycloalkenyl group having 5 to 20 carbon atoms, a cycloalkynyl group having 5 to 20 carbon atoms, or an aryl group having 6 to 20 carbon atoms. In this case, when $R_{44}$ and $R_{45}$ form an aryl group having 6 to 20 carbon atoms, $R_{43}$ and $R_{46}$ are not present. For example, when $R_{44}$ and $R_{45}$ form a fused ring together, they may form a benzene group, and in this case, $R_{43}$ and $R_{46}$ may not be present.

[Formula 2-e]

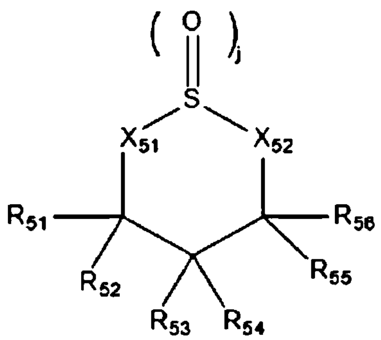

In Formula 2-e above, $X_{51}$ and $X_{52}$ are each independently *-O-* or *-C($R_{X51}$)($R_{X52}$)-*, but both $X_{51}$ and $X_{52}$ are not *-C($R_{X51}$)($R_{X52}$)-*, $R_{51}$, $R_{52}$, $R_{53}$, $R_{54}$, $R_{55}$, and $R_{56}$ are each independently hydrogen, an alkyl group having 1 to 10 carbon atoms, an alkylene group having 1 to 10 carbon atoms, an alkynyl group having 1 to 10 carbon atoms, or halogen, and j is an integer of 1 or 2.

For example, $X_{51}$ and $X_{52}$ both may be *-O-*, or $X_{51}$ may be *-C($R_{X51}$)($R_{X52}$)-*, and $X_{52}$ may be *-O-*.

In addition, $R_{51}$, $R_{52}$, $R_{53}$, $R_{54}$, $R_{55}$, and $R_{56}$ are each independently hydrogen, an alkyl group having 1 to 10 carbon atoms, an alkylene group having 1 to 10 carbon atoms, an alkynyl group having 1 to 10 carbon atoms, or halogen. Specifically, $R_{51}$, $R_{52}$, $R_{53}$, $R_{52}$, $R_{55}$, and $R_{56}$ may each independently be hydrogen, a methyl group *-CH=$CH_2$, *-C=CH, or fluorine (F).

[Formula 2-f]

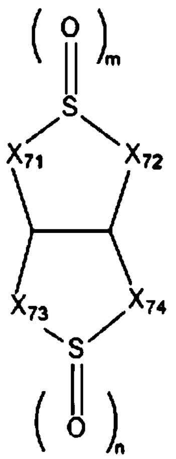

In Formula 2-f above, $X_{71}$ and $X_{72}$ are each independently *-O-* or *-C($R_{X71}$)($R_{X72}$)-*, but both $X_{71}$ and $X_{72}$ are not *-C($R_{X71}$)($R_{X72}$)-*, $X_{73}$ and $X_{74}$ are each independently *-O-* or *-C($R_{X73}$)($R_{X74}$)-*, but both $X_{73}$ and $X_{74}$ are not *-C($R_{X73}$)($R_{X74}$)-*, $R_{X71}$, $R_{X72}$, $R_{X73}$, and $R_{X74}$ are each independently hydrogen, an alkyl group having 1 to 10 carbon atoms, an alkylene group having 1 to 10 carbon atoms, an alkynyl group having 1 to 10 carbon atoms, or halogen, m and n are each independently an integer of 1 or 2, and * is a bonding site.

For example, $X_{71}$ and $X_{72}$ both may be *-O-*, or $X_{71}$ may be *-C($R_{X71}$)($R_{X72}$)-*, and $X_{72}$ may be *-O-*. In addition, for example, $X_{73}$ and $X_{74}$ both may be *-O-*, or $X_{73}$ may be *-C($R_{X73}$)($R_{X73}$)-*, and $X_{74}$ may be *-O-*.

In addition, $R_{X71}$, $R_{X72}$, $R_{X73}$, and $R_{X74}$ are each independently be hydrogen, an alkyl group having 1 to 10 carbon atoms, an alkylene group having 1 to 10 carbon atoms, an alkynyl group having 1 to 10 carbon atoms, or halogen. Specifically, $R_{X71}$, $R_{X72}$, $R_{X73}$, and $R_{X74}$ may each independently be hydrogen, a methyl group *-CH=$CH_2$, *-C=CH, or fluorine (F).

[Formula 2-g]

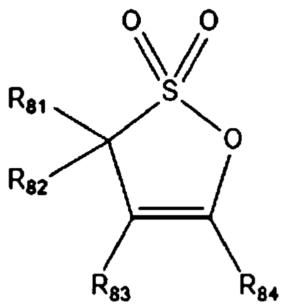

In Formula 2-g above, $R_{81}$, $R_{82}$, $R_{83}$, and $R_{84}$ may each independently be hydrogen, an alkyl group having 1 to 10 carbon atoms, an alkylene group having 1 to 10 carbon atoms, an alkynyl group having 1 to 10 carbon atoms, or halogen. Specifically, $R_{81}$, $R_{82}$, $R_{83}$, and $R_{84}$ may each independently be hydrogen, a methyl group *-CH=$CH_2$, *-C≡CH, or fluorine (F).

Specifically, the cyclic sulfur oxide may include at least one selected from the group consisting of compounds represented by Formulas 2-a-1 to 2-a-25, Formula 2-b-1, Formula 2-c-1, Formula 2-d-1, Formula 2-e-1, Formula 2-e-2, Formula 2-f-1, and Formula 2-g-1. For example, the compound represented by Formula 2-a may include at least one selected from the group consisting of compounds represented by Formulas 2-a-1 to 2-a-25. In addition, the compound represented by Formula 2-b may include a compound represented by Formula 2-b-1. In addition, the compound represented by Formula 2-c may include a compound represented by Formula 2-c-1. In addition, the compound represented by Formula 2-d may include a compound represented by Formula 2-d-1. In addition, the compound represented by Formula 2-e may include at least one selected from the group consisting of compounds represented by Formula 2-e-1 and Formula 2-e-2. In addition, the compound represented by Formula 2-f may include a compound represented by Formula 2-f-1.

More specifically, the cyclic sulfur oxide may include at least one selected from the group consisting of compounds represented by Formulas 2-a-1 to 2-a-10, Formula 2-b-1, Formula 2-c-1, Formula 2-d-1, Formula 2-e-1, Formula 2-e-2, and Formula 2-f-1.

More specifically, the cyclic sulfur oxide may include at least one selected from the group consisting of compounds represented by Formula 2-a-1, Formula 2-a-2, Formula 2-a-3, Formula 2-a-4, Formula 2-a-6, Formula 2-a-10, and Formula 2-b-1. More specifically, the cyclic sulfur oxide may include at least one selected from the group consisting of compounds represented by Formula 2-a-1, Formula 2-a-4, Formula 2-a-10, and Formula 2-b-1. More specifically, the cyclic sulfur oxide may include at least one selected from the group consisting of compounds represented by Formulas 2-a-1, Formula 2-a-10, and Formula 2-b-1. More specifically, the cyclic sulfur oxide may include a compound represented by Formula 2-a-10.

[Formula 2-a-1]

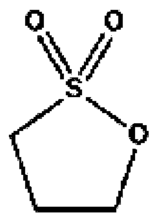

[Formula 2-a-2]

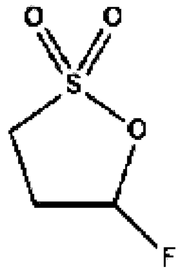

[Formula 2-a-3]

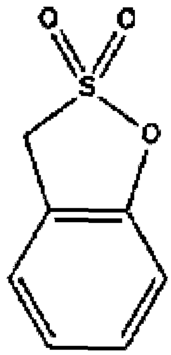

[Formula 2-a-4]

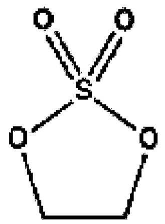

[Formula 2-a-5]

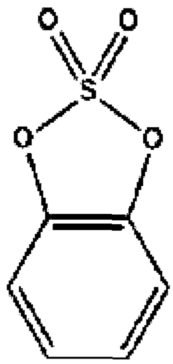

[Formula 2-a-6]

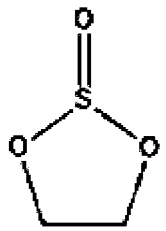

[Formula 2-a-7]

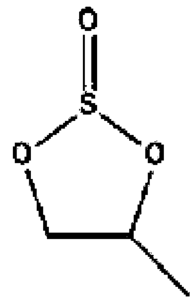

[Formula 2-a-8]

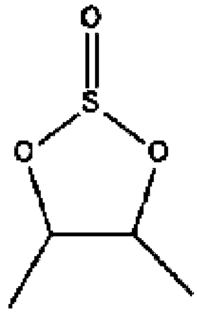

[Formula 2-a-9]

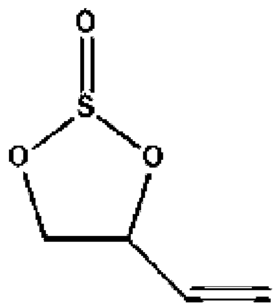

[Formula 2-a-10]

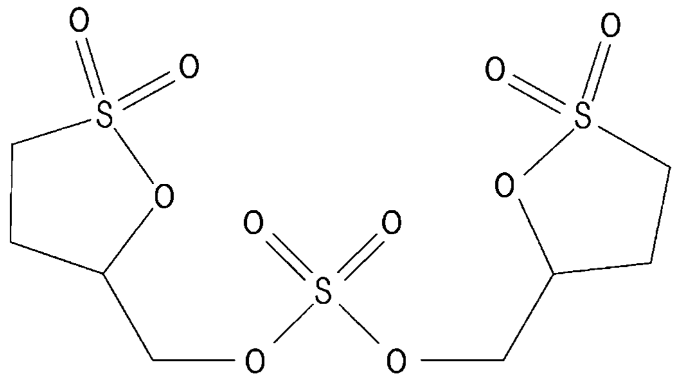

[Formula 2-a-11]

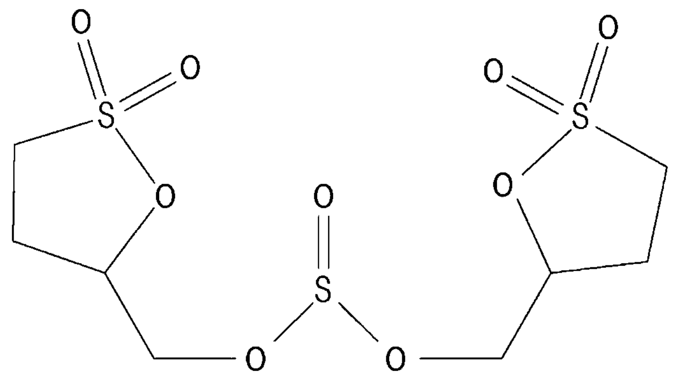

[Formula 2-a-12]

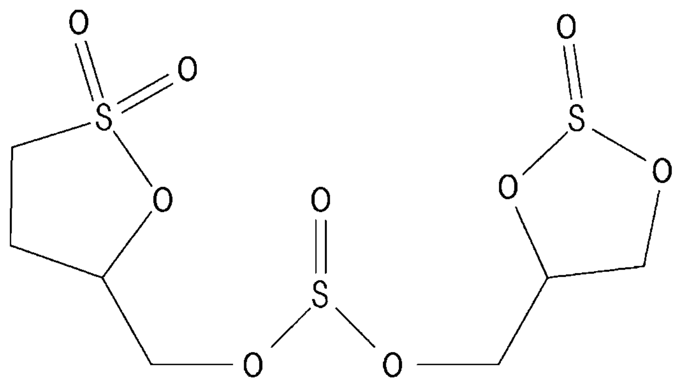

[Formula 2-a-13]

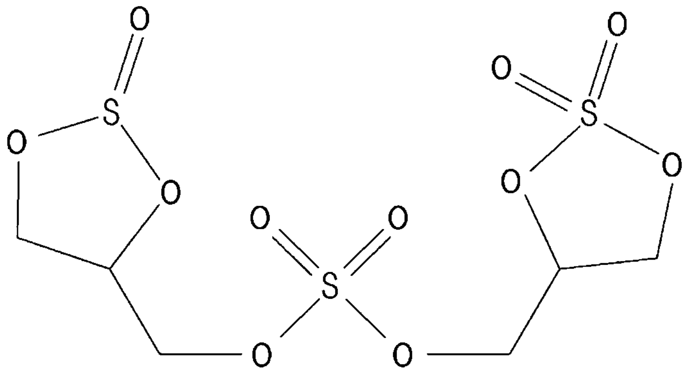

[Formula 2-a-14]

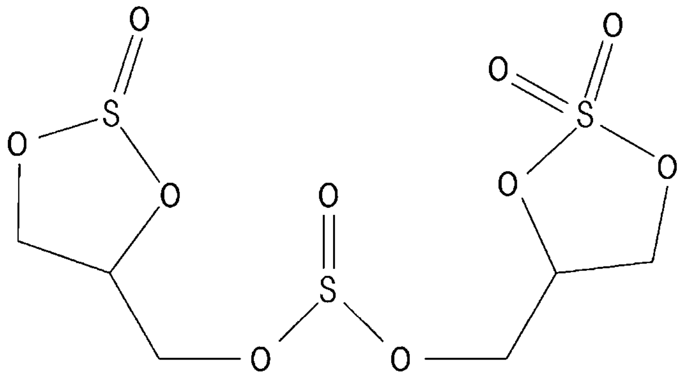

[Formula 2-a-15]

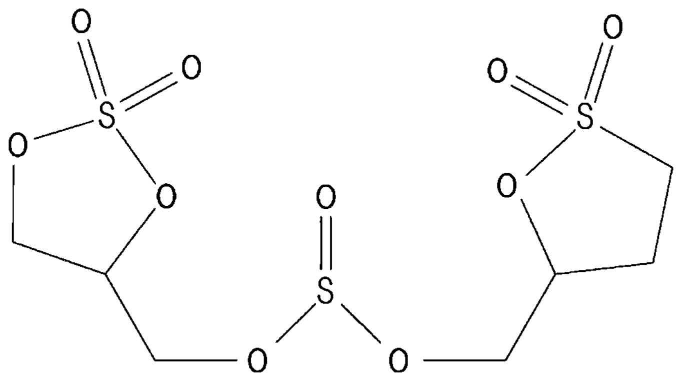

[Formula 2-a-16]

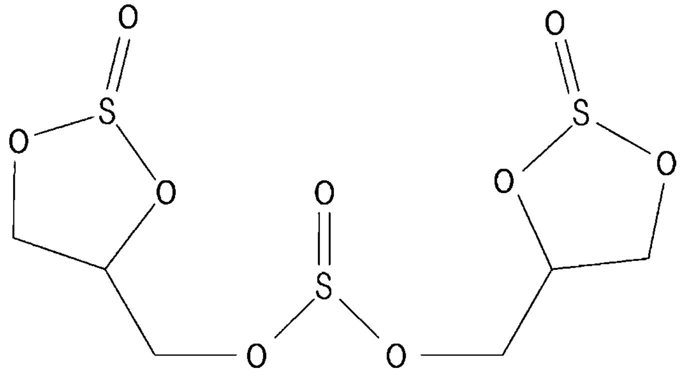

[Formula 2-a-17]

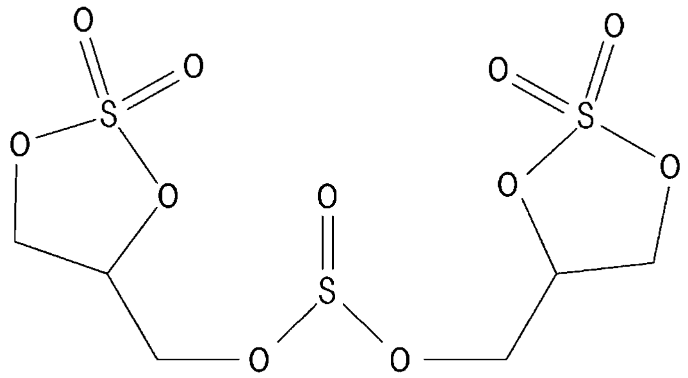

[Formula 2-a-18]

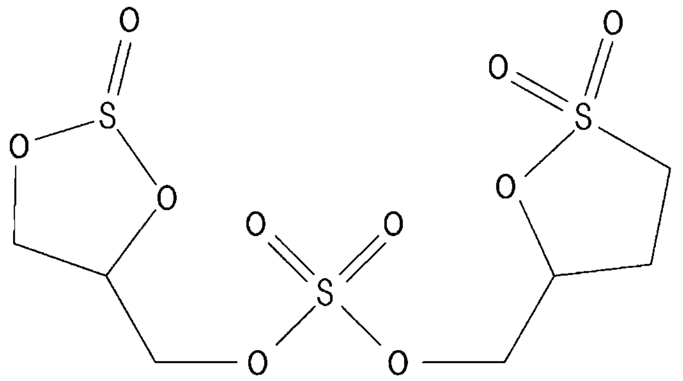

[Formula 2-a-19]

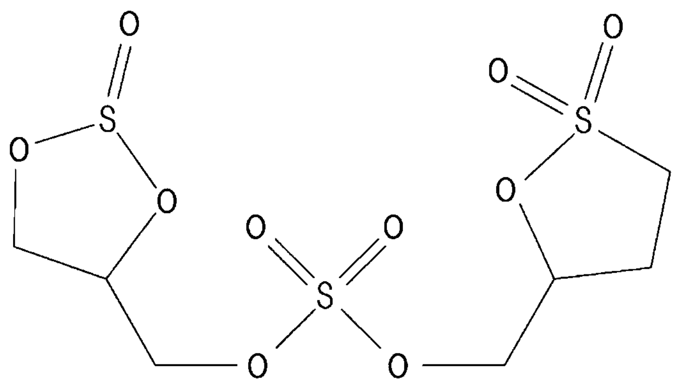

[Formula 2-a-20]

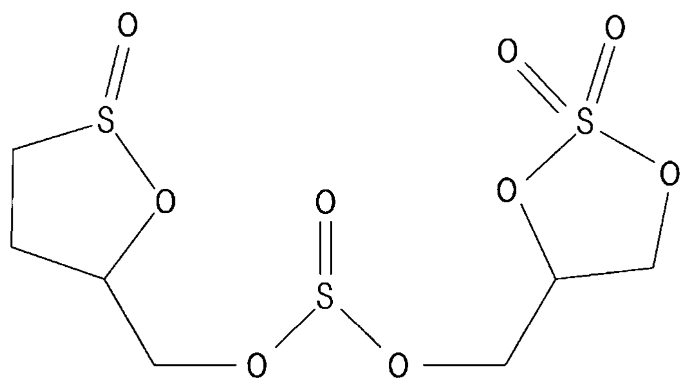

[Formula 2-a-21]

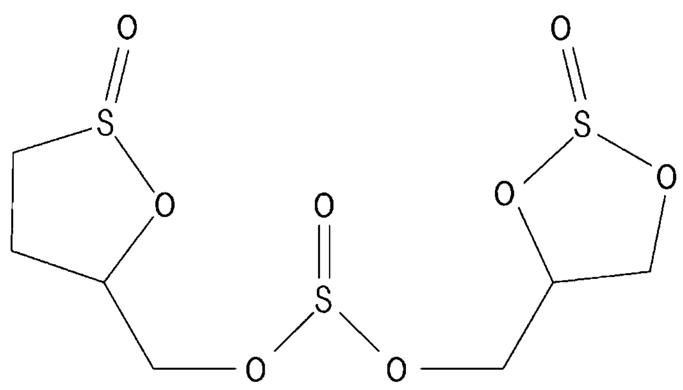

[Formula 2-a-22]

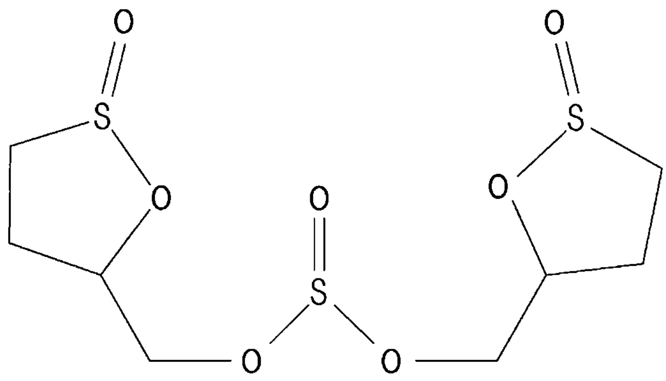

[Formula 2-a-23]

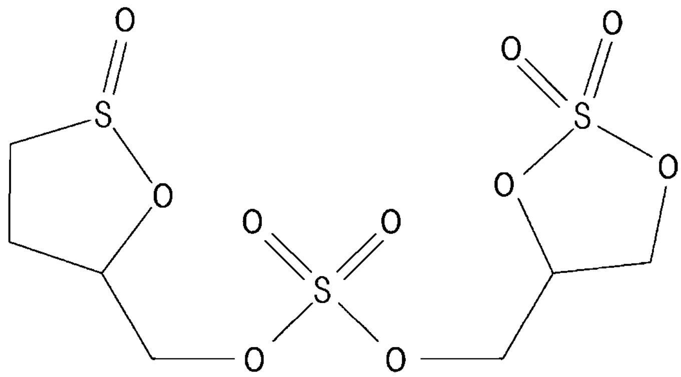

[Formula 2-a-24]

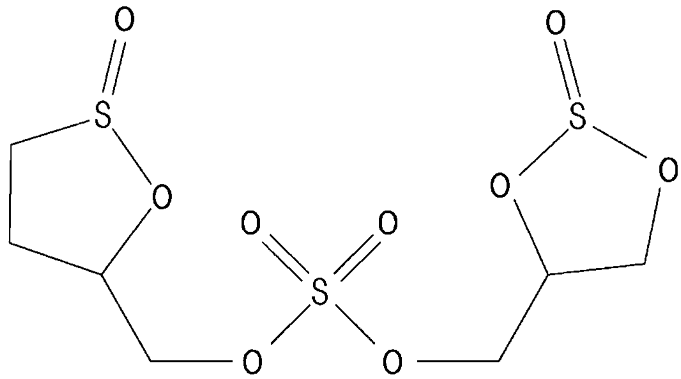

[Formula 2-a-25]

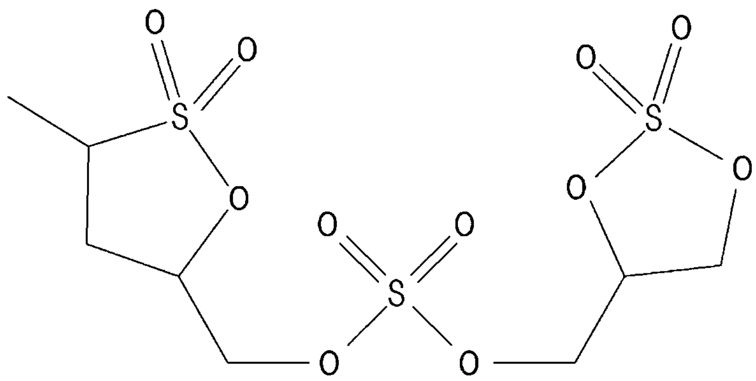

[Formula 2-b-1]

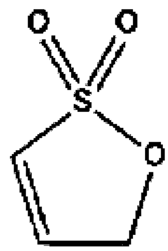

[Formula 2-c-1]

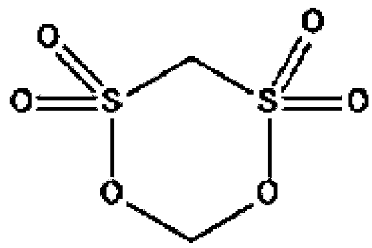

[Formula 2-d-1]

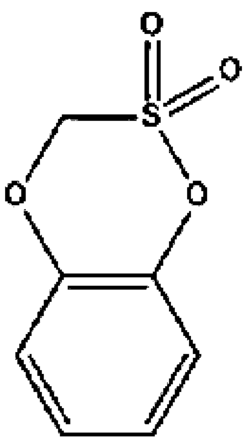

[Formula 2-e-1]

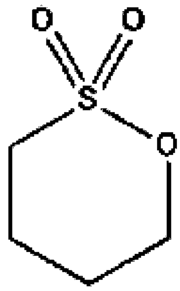

[Formula 2-e-2]

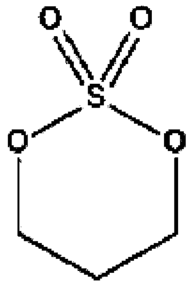

[Formula 2-f-1]

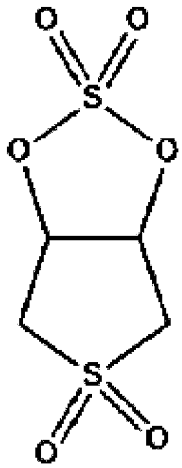

[Formula 2-g-1]

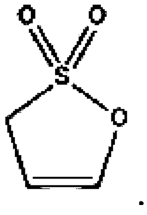

The non-aqueous electrolyte may include the second additive in an amount of 0.01 wt% to 10 wt%, specifically 0.05 wt% to 7 wt%, more specifically 0.1 wt% to 2 wt%, and more specifically 0.5 wt% to 1.5 wt%. When the second additive is used in the amount range described above, the effect of capturing reactive oxygen generated upon initial activation may be sufficiently provided, and the concern over increased resistance when adding an excessive amount may be prevented.

A ratio of the weight of the first additive included in the positive electrode and the weight of the second additive included in the non-aqueous electrolyte may be 5:95 to 95:5, specifically 10:90 to 92:8, more specifically 30:70 to 70:30, and even more specifically 40:60 to 60:40, and within the above-described weight ratio, the effect resulting from the combined use of the first additive and the second additive is at a good balance, and accordingly, effects from improvements in the high-temperature service life performance, high-temperature storage performance, and safety of lithium secondary batteries may be preferably provided.

The additive may further include an additional additive (which may be indicated as a third additive) along with the first additive and the second additive. The additional additive may be included in the non-aqueous electrolyte to prevent negative electrode collapse caused by decomposition of the non-aqueous electrolyte in a high-power setting, prevent low-temperature high-rate discharge characteristics, high-temperature stability, and overcharging protection, and suppressing battery swelling at high temperature.

Specifically, the additional additive may include at least one selected from the group consisting of vinylene carbonate, vinyl ethylene carbonate, fluoroethylene carbonate, succinonitrile, adiponitrile, ethylene sulfate, lithium bis-(oxalato)borate (LiBOB), 3-trimethoxysilanyl-propyl-N-aniline (TMSPa), and tris(trimethylsilyl) phosphite (TMSPi), and may specifically be vinylene carbonate.

The non-aqueous electrolyte may include the additional additive in an amount of 0.1 wt% to 15 wt%.

The outer shape of the lithium secondary battery of the present invention is not particularly limited, and thus a cylindrical shape using a can, a prismatic shape, a pouch shape, or a coin shape, may be used.

Hereinafter, the present invention will be described in more detail through specific embodiments. however, Examples shown below are illustrated only for the understanding of the present invention, and the scope of the inventive concept is not limited thereto. It will be apparent to those skilled in the art that various modifications and alterations are possible within the scope and technical range of the present invention, and such modifications and alterations fall within the scope of claims included herein.

## Examples and Comparative Examples

### Example 1

(Preparation of non-aqueous electrolyte)

As an organic solvent, a mixture of ethylene carbonate (EC), ethylmethyl carbonate (EMC), and diethyl carbonate (DEC) at a volume ratio of 20:70:10 was used.

$LiPF_6$ as a lithium salt and the compound represented by Formula 2-a-1 as a second additive were added to the organic solvent to prepare a non-aqueous electrolyte.

The $LiPF_6$ was included at a molar concentration of 1.2 M in the non-aqueous electrolyte.

The compound represented by Formula 2-a-1 was included in an amount of 1 wt% in the non-aqueous electrolyte.

(Manufacture of lithium secondary battery)

A positive electrode active material ($Li[Ni_{0.6}Co_{0.1}Mn_{0.3}]O_2$), a first additive (compound represented by Formula 1-1-A1), a conductive material (carbon nanotube), and a binder (polyvinylidene fluoride) were added in a weight ratio of 97.00:0.08:1.52:1.40 to N-methyl-2-pyrrolidone (NMP) as a solvent to prepare a positive electrode slurry (solid content: 72 wt%). The positive electrode slurry was applied onto one surface of a positive electrode current collector (Al thin film) having a thickness of 12 $\mu$m, and then dried and roll-pressed to form a positive electrode active material layer (thickness: 115 $\mu$m), which was used as a positive electrode.

A negative electrode active material (graphite and silicon-carbon composite mixed in a weight ratio of 95:5), a conductive material (graphite and silicon-carbon composite mixed in a weight ratio of 95:5), and a binder (styrene-butadiene rubber and carboxymethyl cellulose) were added to distilled water as a solvent in a weight ratio of 94.9:0.5:4.6 to prepare a negative electrode slurry (solid content: 54 wt%) . The negative electrode slurry was applied onto one surface of a negative electrode current collector (Cu thin film) having a thickness of 6 $\mu$m, and then dried and roll-pressed to form a negative electrode active material layer (thickness: 160 $\mu$m), which was used as a negative electrode.

A polyethylene porous film separator was interposed between the prepared positive and negative electrodes in a dry room, and then the prepared non-aqueous electrolyte was injected to prepare a lithium secondary battery.

### Example 2

A non-aqueous electrolyte and a lithium secondary battery were prepared in the same manner as in Example 1,

except that instead of the compound represented by Formula 2-a-1 above, the compound represented by Formula 2-a-4 above was included in an amount of 1 wt% as the second additive in the non-aqueous electrolyte.

**Example 3**

A non-aqueous electrolyte and a lithium secondary battery were prepared in the same manner as in Example 1, except that instead of the compound represented by Formula 2-a-1 above, the compound represented by Formula 2-b-1 above was included in an amount of 1 wt% as the second additive in the non-aqueous electrolyte.

**Example 4**

A non-aqueous electrolyte and a lithium secondary battery were prepared in the same manner as in Example 1, except that instead of the compound represented by Formula 2-a-1 above, the compound represented by Formula 2-a-10 above was included in an amount of 1 wt% as the second additive in the non-aqueous electrolyte.

**Example 5**

A non-aqueous electrolyte and a lithium secondary battery were prepared in the same manner as in Example 1, except that instead of the compound represented by Formula 2-a-1 above, the compound represented by Formula 2-a-2 above was included in an amount of 1 wt% as the second additive in the non-aqueous electrolyte.

**Example 6**

A non-aqueous electrolyte and a lithium secondary battery were prepared in the same manner as in Example 1, except that instead of the compound represented by Formula 2-a-1 above, the compound represented by Formula 2-a-3 above was included in an amount of 1 wt% as the second additive in the non-aqueous electrolyte.

**Example 7**

A non-aqueous electrolyte and a lithium secondary battery were prepared in the same manner as in Example 1, except that instead of the compound represented by Formula 2-a-1 above, the compound represented by Formula 2-a-6 above was included in an amount of 1 wt% as the second additive in the non-aqueous electrolyte.

**Comparative Example 1**

(Preparation of non-aqueous electrolyte)

A non-aqueous electrolyte was prepared in the same manner as in Example 1, except that the second additive (compound represented by Formula 2-a-1) was not added to the non-aqueous electrolyte.

(Manufacture of lithium secondary battery)

A positive electrode active material ($Li[Ni_{0.6}Co_{0.1}Mn_{0.3}]O_2$), a conductive material (carbon nanotube), and a binder (polyvinylidene fluoride) were added in a weight ratio of 97.00:1.56:1.44 to N-methyl-2-pyrrolidone (NMP) as a solvent to prepare a positive electrode slurry (solid content: 72 wt%). The positive electrode slurry was applied onto one surface of a positive electrode current collector (Al thin film) having a thickness of 12 $\mu$m, and then dried and roll-pressed to form a positive electrode active material layer (thickness: 115 $\mu$m), which was used as a positive electrode.

A lithium secondary battery was prepared in the same manner as in Example 1, except that the non-aqueous electrolyte and the positive electrode prepared above were used.

**Comparative Example 2**

(Preparation of non-aqueous electrolyte)

A non-aqueous electrolyte was prepared in the same manner as in Example 1, except that instead of the second additive (compound represented by Formula 2-a-1), the compound represented by Formula 1-1-A1 was included in an amount of 1 wt% in the non-aqueous electrolyte.

(Manufacture of lithium secondary battery)

A positive electrode was prepared in the same manner as in Comparative Example 1.
A lithium secondary battery was prepared in the same manner as in Example 1, except that the non-aqueous electrolyte and the positive electrode prepared above were used.

**Comparative Example 3**

(Preparation of non-aqueous electrolyte)

A non-aqueous electrolyte was prepared in the same manner as in Example 1.

(Manufacture of lithium secondary battery)

A positive electrode was prepared in the same manner as in Comparative Example 1.
A lithium secondary battery was prepared in the same manner as in Example 1, except that the non-aqueous electrolyte and the positive electrode prepared above were used.

**Comparative Example 4**

(Preparation of non-aqueous electrolyte)

A non-aqueous electrolyte was prepared in the same manner as in Example 1, except that the compound represented by Formula 1-1-A1 was further included in an amount of 1 wt% in the non-aqueous electrolyte.

(Manufacture of lithium secondary battery)

A positive electrode was prepared in the same manner as in Comparative Example 1.
A lithium secondary battery was prepared in the same manner as in Example 1, except that the non-aqueous electrolyte and the positive electrode prepared above were used.

**Comparative Example 5**

(Preparation of non-aqueous electrolyte)

A non-aqueous electrolyte was prepared in the same manner as in Comparative Example 1.

(Manufacture of lithium secondary battery)

A lithium secondary battery was prepared in the same manner as in Example 1, except that the non-aqueous electrolyte prepared above was used.

**Comparative Example 6**

(Preparation of non-aqueous electrolyte)

A non-aqueous electrolyte was prepared in the same manner as in Comparative Example 2.

(Manufacture of lithium secondary battery)

A positive electrode active material ($Li[Ni_{0.6}Co_{0.1}Mn_{0.3}]O_2$), a second additive (compound represented by Formula 2-a-1), a conductive material (carbon nanotube), and a binder (polyvinylidene fluoride) were added in a weight ratio of 97.00:0.08:1.52:1.40 to N-methyl-2-pyrrolidone (NMP) as a solvent to prepare a positive electrode slurry (solid content: 72 wt%). The positive electrode slurry was applied onto one surface of a positive electrode current collector (Al thin film) having a thickness of 12 $\mu$m, and then dried and roll-pressed to form a positive electrode active material layer (thickness: 115 $\mu$m), which was used as a positive electrode.
A lithium secondary battery was prepared in the same manner as in Example 1, except that the non-aqueous electrolyte and the positive electrode prepared above were used.

## Experimental Examples

### Experimental Example 1: Evaluation of high temperature cycle performance

The lithium secondary batteries of Examples 1 to 7 and Comparative Examples 1 to 6 prepared above were charged up to 4.35 V (1/40 C) in the conditions of CC/CV and 0.33 C at 45 °C using an electrochemical charger and discharger, and 300 cycles of charging and discharging were performed with discharging up to 2.0 V in the conditions of CC and 0.33 C as one cycle.

(1) Capacity retention

The capacity retention was calculated through the following equation, and the results are shown in Table 1 below.

Capacity retention (%) = {(discharge capacity after 300th cycle)/(discharge capacity after 1st cycle)} $\times$ 100

(2) Resistance increase rate

After one cycle of charging and discharging, the discharge capacity after one cycle was measured using an electrochemical charger and discharger, a state of charge (SOC) was adjusted to 50%, and a pulse of 2.5 C was then applied for 10 seconds to calculate initial resistance through a difference between a voltage before the pulse application and a voltage after the pulse application.

After 300 cycles of charging and discharging, the resistance after 300 cycles was calculated in the same manner as above, the resistance increase rate was calculated using the following equation, and the results are shown in Table 1 below.

Resistance increase rate (%) = (resistance after 300th cycle - initial resistance)/initial resistance $\times$ 100

(3) Amount of gas generation

After 300 cycles of charging and discharging, an amount of gas generated from the lithium secondary battery was measured using GC-FID/TCD, and the results are shown in Table 1 below.

[Table 1]

| | Experimental Example 1 | | |
|---|---|---|---|
| | Capacity retention (%) | Resistance increase rate (%) | Amount of gas generation (μL) |
| Example 1 | 96.1 | 15.7 | 1850 |
| Example 2 | 95.9 | 17.3 | 1970 |
| Example 3 | 95.4 | 16.8 | 1810 |
| Example 4 | 96.3 | 14.3 | 1780 |
| Example 5 | 94.2 | 18.8 | 2050 |
| Example 6 | 93.8 | 19.3 | 2170 |
| Example 7 | 94.1 | 21.1 | 2500 |
| Comparative Example 1 | 59.3 | 55.3 | 6550 |
| Comparative Example 2 | 68.8 | 48.4 | 5400 |
| Comparative Example 3 | 71.2 | 40.9 | 4900 |
| Comparative Example 4 | 73.8 | 35.7 | 3900 |
| Comparative Example 5 | 85.3 | 25.1 | 3500 |
| Comparative Example 6 | 89.5 | 23.5 | 2700 |

Referring to Table 1, it is determined that the lithium secondary batteries of Examples 1 to 7, which are lithium secondary batteries in which a positive electrode containing a first additive and a non-aqueous electrolyte containing a

second additive are combined had a higher capacity retention, a lower resistance increase rate, and less gas generation during high-temperature cycle charging/discharging than those of Comparative Examples 1 to 6.

**Experimental Example 2: Evaluation of high temperature storage performance**

The lithium secondary batteries of Examples 1 to 7 and Comparative Examples 1 to 6 prepared above were charged up to 4.35 V (1/40 C) in the conditions of CC/CV and 0.33 C at 25 °C and discharged up to 2.0 V in the condition of 0.33 C to perform initial charging/discharging, and then charged up to 4.35 V (1/40 C) in the conditions of CC/CV and 0.33 C at 25 °C, and then stored at 60 °C for 12 weeks.

(1) Capacity retention

After storage for 12 weeks, the lithium secondary batteries were charged up to 4.35 V (1/40 C) in the conditions of CC/CV and 0.33 C at 25 °C, and discharged up to 2.0 V in the condition of 0.33 C to measure the capacity during discharge.
The capacity retention was evaluated according to the following formula, and the results are shown in Table 2 below.

Capacity retention (%)=(discharge capacity after storage for 12 weeks/initial discharge capacity)$\times$100

(2) Resistance increase rate

After the initial charging/discharging, the capacity was determined at room temperature, the lithium secondary batteries were charged at 50% of SOC with respect to the discharge capacity, discharged for 10 seconds at a current of 2.5 C to measure resistance using the voltage drop difference at this point as a initial resistance, and were stored at 60 °C for 12 weeks to measure a final resistance in the same manner as the initial resistance, thereby calculating resistance increase rate using the following equation. The results are shown in Table 2 below.

Resistance increase rate (%) = (final resistance - initial resistance) / (initial resistance) $\times$ 100

(3) Amount of gas generation

After 12 weeks of storage, an amount of gas generated from the lithium secondary battery was measured using GC-FID/TCD, and the results are shown in Table 2 below.

[Table 2]

| | Experimental Example 2 | | |
|---|---|---|---|
| | Capacity retention (%) | Resistance increase rate (%) | Amount of gas generation (μL) |
| Example 1 | 97.6 | 13.8 | 1760 |
| Example 2 | 96.9 | 14.9 | 1840 |
| Example 3 | 96.2 | 17.3 | 1680 |
| Example 4 | 97.9 | 16.9 | 1710 |
| Example 5 | 93.1 | 19.8 | 1950 |
| Example 6 | 94.3 | 21.5 | 1890 |
| Example 7 | 92.6 | 23.3 | 2130 |
| Comparative Example 1 | 61.5 | 48.2 | 7300 |
| Comparative Example 2 | 73.1 | 39.3 | 6210 |
| Comparative Example 3 | 74.2 | 37.9 | 5900 |
| Comparative Example 4 | 76.8 | 35.3 | 4800 |
| Comparative Example 5 | 81.6 | 29.5 | 3650 |
| Comparative Example 6 | 88.5 | 26.3 | 2640 |

Referring to Table 2, it is determined that the lithium secondary batteries of Examples 1 to 7, which are lithium secondary batteries in which a positive electrode containing a first additive and a non-aqueous electrolyte containing a second additive are combined had a higher capacity retention, a lower resistance increase rate, and less gas generation during high-temperature storage than those of Comparative Examples 1 to 6.

## Claims

**1.** A lithium secondary battery comprising:

a positive electrode;
a negative electrode;
a separator placed between the positive electrode and the negative electrode; and
a non-aqueous electrolyte,
wherein the positive electrode comprises a positive electrode active material and a first additive,
the non-aqueous electrolyte comprises a lithium salt, an organic solvent, and a second additive,
the first additive comprises at least one selected from the group consisting of compounds represented by Formula 1-1 and Formula 1-2 below, and
the second additive comprises a cyclic sulfur oxide-based compound,

[Formula 1-1]

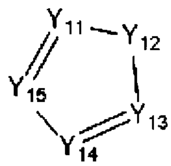

wherein in Formula 1-1 above, $Y_{11}$ is nitrogen (N) or carbon (C) substituted with $R_{Y11}$. $Y_{12}$ is oxygen (O), sulfur (S), nitrogen (N) substituted with $R_{Y121}$, or carbon (C) substituted with $R_{Y122}$ and $R_{Y123}$. $Y_{13}$ is nitrogen (N) or carbon (C) substituted with $R_{Y13}$, $Y_{14}$ is nitrogen (N) or carbon (C) substituted with $R_{Y14}$, and $Y_{13}$ is nitrogen (N) or carbon (C) substituted with $R_{Y15}$, wherein at least one of $Y_{11}$ or $Y_{13}$ is nitrogen (N) and at least one of $Y_{11}$, $Y_{12}$, $Y_{13}$, $Y_{14}$, or $Y_{15}$ is substituted carbon (C), and
$R_{Y11}$, $R_{Y121}$, $R_{Y122}$, $R_{Y123}$, $R_{Y13}$, $R_{Y14}$, and $R_{Y15}$ are each independently selected from hydrogen, an alkyl group having 1 to 3 carbon atoms, and a substituent represented by Formula 1-a below, wherein at least one of $R_{Y11}$, $R_{Y121}$, $R_{Y122}$, $R_{Y123}$, $R_{Y13}$, $R_{Y14}$, or $R_{Y15}$ is a substituent represented by Formula 1-a above,

[Formula 1-2]

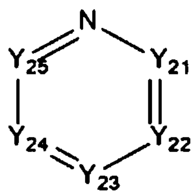

wherein in Formula 1-2 above, $Y_{21}$ is nitrogen (N) or carbon (C) substituted with $R_{Y21}$, $Y_{22}$ is nitrogen (N) or carbon (C) substituted with $R_{Y22}$, $Y_{23}$ is nitrogen (N) or carbon (C) substituted with $R_{Y23}$, $Y_{24}$ is nitrogen (N) or carbon (C) substituted with $R_{Y24}$, and $Y_{25}$ is nitrogen (N) or carbon (C) substituted with $R_{Y25}$, wherein at least one of $Y_{21}$, $Y_{22}$, $Y_{23}$, $Y_{24}$, or $Y_{25}$ is substituted carbon (C), and
$R_{Y21}$, $R_{Y22}$, $R_{Y23}$, $R_{Y24}$, and $R_{Y25}$ are each independently selected from hydrogen, an alkyl group having 1 to 3 carbon atoms, and a substituent represented by Formula 1-a below, wherein at least one of $R_{Y21}$, $R_{Y22}$, $R_{Y23}$, $R_{Y24}$, or $R_{Y25}$ is a substituent represented by Formula 1-a above, and

[Formula 1-a]

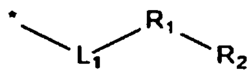

wherein in Formula 1-a above, $L_1$ is selected from a direct bond, ester, ether, and an alkylene group having 1 to 5 carbon atoms, $R_1$ is a direct bond or an alkylene group having 1 to 5 carbon atoms, and $R_2$ is *-CH=$CH_2$ or *-C=CH, wherein * is a bonding site.

2. The lithium secondary battery of claim 1, wherein the compound represented by Formula 1-1 above comprises at least one selected from the group consisting of compounds represented by Formula 1-1-A, Formula 1-1-B, Formula 1-1-C, Formula 1-1-D, Formula 1-1-E, and Formula 1-1-F below:

[Formula 1-1-A]

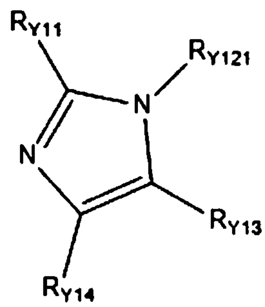

[Formula 1-1-B]

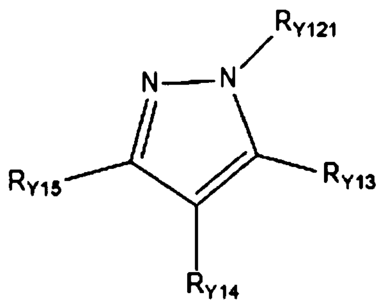

[Formula 1-1-C]

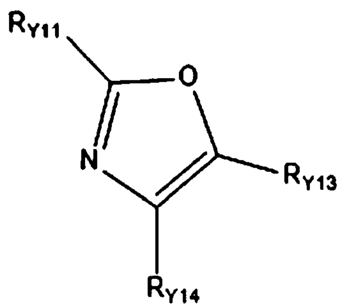

[Formula 1-1-D]

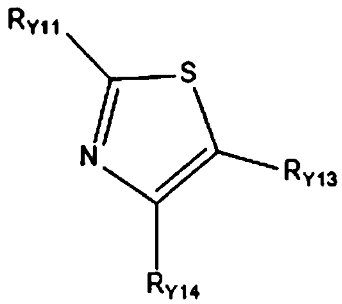

[Formula 1-1-E]

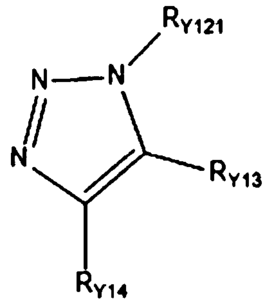

[Formula 1-1-F]

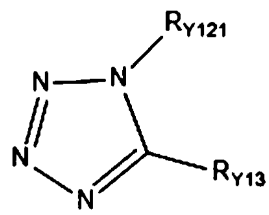

wherein in Formula 1-1-A, Formula 1-1-B, Formula 1-1-C, Formula 1-1-D, Formula 1-1-E, and Formula 1-1-F above, $R_{Y11}$, $R_{Y121}$, $R_{Y122}$, $R_{Y123}$, $R_{Y13}$, $R_{Y14}$, and $R_{Y15}$ are as defined in Formula 1-1.

3. The lithium secondary battery of claim 1, wherein the compound represented by Formula 1-2 above comprises at least one selected from the group consisting of compounds represented by Formula 1-2-A, Formula 1-2-B, Formula 1-2-C, Formula 1-2-D, and Formula 1-2-E below:

[Formula 1-2-A]

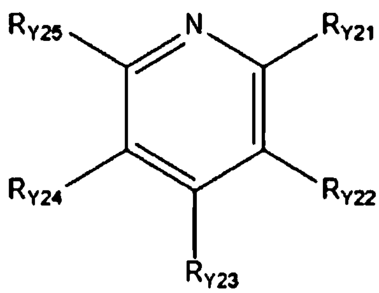

[Formula 1-2-B]

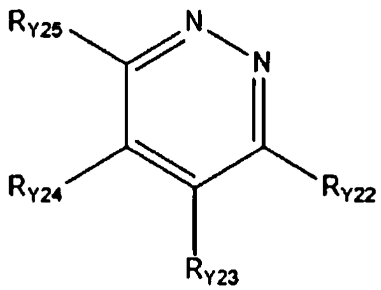

[Formula 1-2-C]

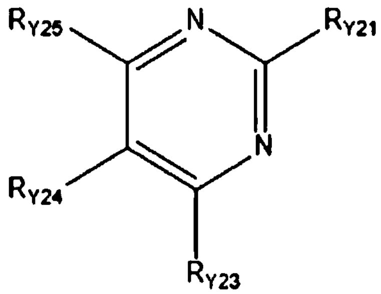

[Formula 1-2-D]

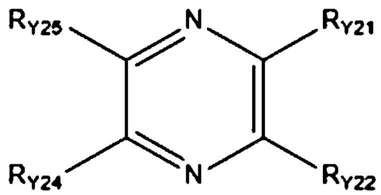

[Formula 1-2-E]

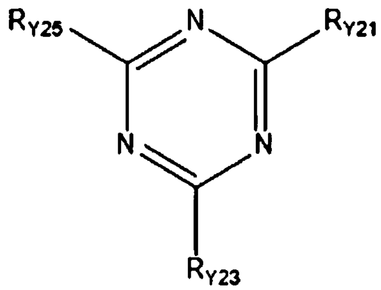

wherein in Formula 1-2-A, Formula 1-2-B, Formula 1-2-C, Formula 1-2-D, and Formula 1-2-E above, $R_{Y21}$, $R_{Y22}$, $R_{Y23}$, $R_{Y24}$, and $R_{Y25}$ are as defined in Formula 1-2.

**4.** The lithium secondary battery of claim 1, wherein the first additive comprises the compound represented by Formula 1-1 above.

**5.** The lithium secondary battery of claim 1, wherein the compound represented by Formula 1-1 above comprises at least one selected from the group consisting of compounds represented by Formulas 1-1-A1 to 1-1-A4 below:

[Formula 1-1-A1]

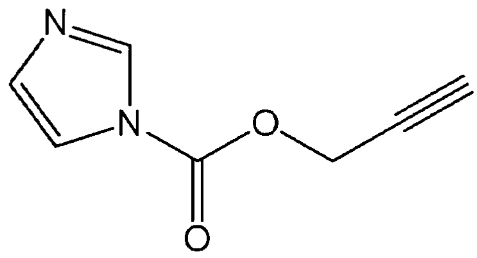

[Formula 1-1-A2]

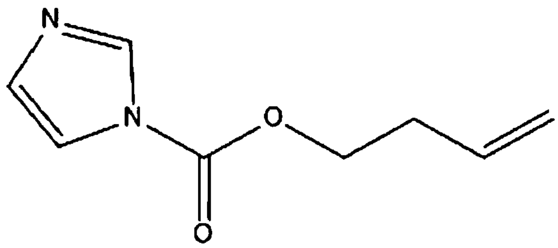

[Formula 1-1-A3]

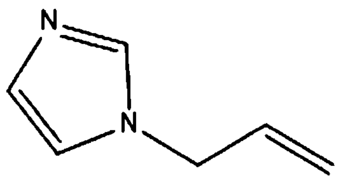

[Formula 1-1-A4]

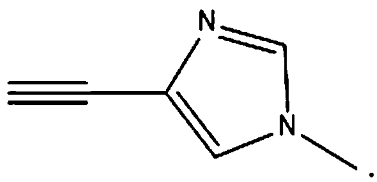

6. The lithium secondary battery of claim 1, wherein the positive electrode comprises the first additive in an amount of 0.004 to 8 parts by weight with respect to 100 parts by weight of the positive electrode active material.

7. The lithium secondary battery of claim 1, wherein the positive electrode comprises the first additive in an amount of 0.04 to 4 parts by weight with respect to 100 parts by weight of the positive electrode active material.

8. The lithium secondary battery of claim 1, wherein the cyclic sulfur oxide-based compound comprises at least one selected from the group consisting of compounds represented by Formula 2-a, Formula 2-b, Formula 2-c, Formula 2-d, Formula 2-e, Formula 2-f, and Formula 2-g below:

[Formula 2-a]

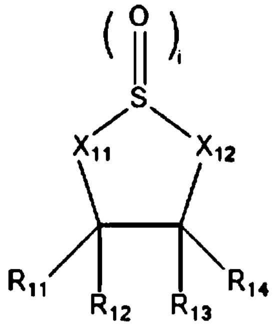

wherein in Formula 2-a above, $X_{11}$ and $X_{12}$ are each independently *-O-* or *-C($R_{X11}$)($R_{X12}$)-*, but both $X_{11}$ and $X_{12}$ are not *-C($R_{x11}$)($R_{X12}$)-*,

$R_{11}$, $R_{14}$, $R_{X11}$, and $R_{X12}$ are each independently hydrogen, an alkyl group having 1 to 10 carbon atoms, an alkylene group having 1 to 10 carbon atoms, an alkynyl group having 1 to 10 carbon atoms, or halogen,

$R_{12}$ and $R_{13}$ are each independently hydrogen, an alkyl group having 1 to 10 carbon atoms, an alkylene group having 1 to 10 carbon atoms, an alkynyl group having 1 to 10 carbon atoms, a halogen group, or a substituent represented by Formula 3 below, or $R_{12}$ and $R_{13}$ form a fused ring together to provide a cycloalkyl group having 5 to 20 carbon atoms, a cycloalkenyl group having 5 to 20 carbon atoms, a cycloalkynyl group having 5 to 20 carbon atoms, or an aryl group having 6 to 20 carbon atoms, provided that when $R_{12}$ and $R_{13}$ form an aryl group having 6 to 20 carbon atoms, $R_{11}$ and $R_{14}$ are not present,

i is an integer of 1 or 2, and

* is a bonding site,

[Formula 2-b]

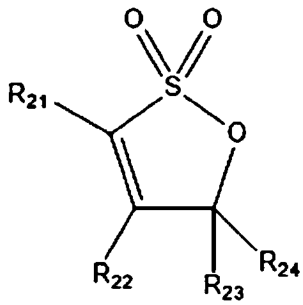

wherein in Formula 2-b above, $R_{21}$, $R_{22}$, $R_{23}$, and $R_{24}$ are each independently hydrogen, an alkyl group having 1 to 10 carbon atoms, an alkylene group having 1 to 10 carbon atoms, an alkynyl group having 1 to 10 carbon atoms, or halogen,

[Formula 2-c]

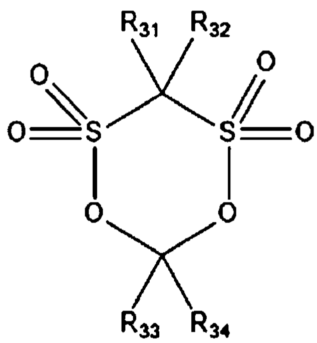

wherein in Formula 2-c above, $R_{31}$, $R_{32}$, $R_{33}$, and $R_{34}$ are each independently hydrogen, an alkyl group having 1 to 10 carbon atoms, an alkylene group having 1 to 10 carbon atoms, an alkynyl group having 1 to 10 carbon atoms, or halogen,

[Formula 2-d]

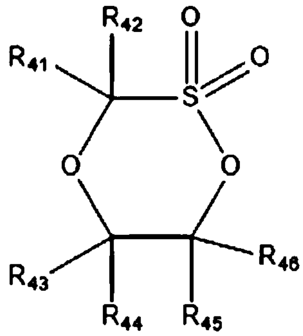

wherein in Formula 2-d above, $R_{41}$, $R_{42}$, $R_{43}$, and $R_{46}$ are each independently hydrogen, an alkyl group having 1 to 10 carbon atoms, an alkylene group having 1 to 10 carbon atoms, an alkynyl group having 1 to 10 carbon atoms, or halogen, and

$R_{44}$ and $R_{45}$ are each independently hydrogen, an alkyl group having 1 to 10 carbon atoms, an alkylene group having 1 to 10 carbon atoms, an alkynyl group having 1 to 10 carbon atoms, or halogen, or $R_{44}$ and $R_{45}$ form a fused ring together to provide a cycloalkyl group having 5 to 20 carbon atoms, a cycloalkenyl group having 5 to 20 carbon atoms, a cycloalkynyl group having 5 to 20 carbon atoms, or an aryl group having 6 to 20 carbon atoms, provided that when $R_{44}$ and $R_{45}$ form an aryl group having 6 to 20 carbon atoms, $R_{43}$ and $R_{46}$ are not present,

[Formula 2-e]

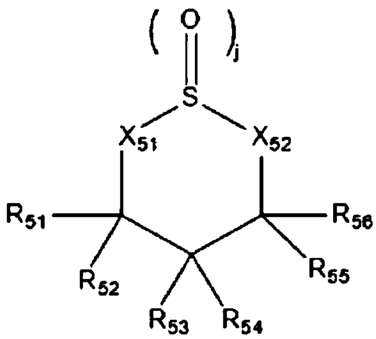

wherein in Formula 2-e above, $X_{51}$ and $X_{52}$ are each independently *-O-* or *-C($R_{X51}$)($R_{X52}$)-*, but both $X_{51}$ and $X_{52}$ are not *-C($R_{X51}$)($R_{XS2}$)-*,

$R_{51}$, $R_{52}$, $R_{53}$, $R_{54}$, $R_{55}$, and $R_{56}$ are each independently hydrogen, an alkyl group having 1 to 10 carbon atoms, an alkylene group having 1 to 10 carbon atoms, an alkynyl group having 1 to 10 carbon atoms, or halogen, and

j is an integer of 1 or 2,

[Formula 2-f]

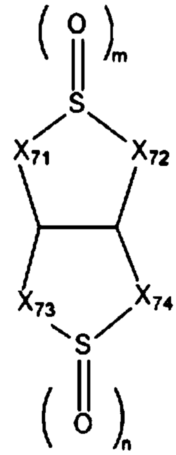

wherein in Formula 2-f above, $X_{71}$ and $X_{72}$ are each independently *-O-* or *-C($R_{X71}$)($R_{X72}$)-*, but both $X_{71}$ and $X_{72}$ are not *-C($R_{X71}$)($R_{X72}$)-*,
$X_{73}$ and $X_{74}$ are each independently *-O-* or *-C($R_{X73}$)($R_{X74}$)-*, but both $X_{73}$ and $X_{74}$ are not *-C($R_{X73}$)($R_{X74}$)-*,
$R_{X71}$, $R_{X72}$, $R_{X73}$, and $R_{X74}$ are each independently be hydrogen, an alkyl group having 1 to 10 carbon atoms, an alkylene group having 1 to 10 carbon atoms, an alkynyl group having 1 to 10 carbon atoms, or halogen,
m and n are each independently an integer of 1 or 2, and
* is a bonding site,

[Formula 2-g]

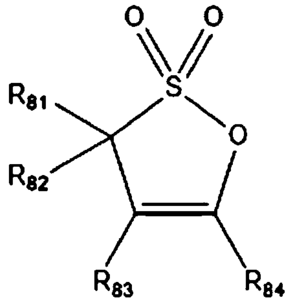

wherein in Formula 2-g above, $R_{81}$, $R_{82}$, $R_{83}$, and $R_{84}$ are each independently hydrogen, an alkyl group having 1 to 10 carbon atoms, an alkylene group having 1 to 10 carbon atoms, an alkynyl group having 1 to 10 carbon atoms, or halogen,

[Formula 3]

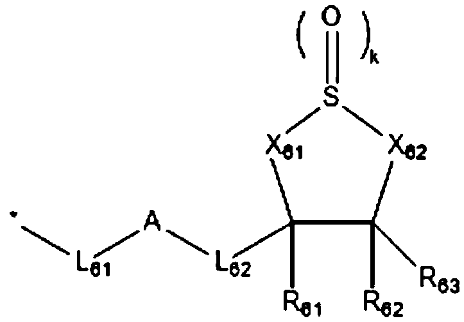

wherein in Formula 3 above, $L_{61}$ and $L_{62}$ are each independently a direct bond or an alkylene group having 1 to 5 carbon atoms,

A is a substituent represented by Formula 4 below,
$X_{61}$ and $X_{62}$ are each independently *-O-* or *-C($R_{X61}$)($R_{X62}$)-*, but both $X_{11}$ and $X_{12}$ are not *-C($R_{X61}$)($R_{X62}$)-*,
$R_{63}$, $R_{X61}$, and $R_{X62}$ are each independently hydrogen, an alkyl group having 1 to 10 carbon atoms, an alkylene group having 1 to 10 carbon atoms, an alkynyl group having 1 to 10 carbon atoms, or halogen,
$R_{61}$ and $R_{62}$ are independently hydrogen, an alkyl group having 1 to 10 carbon atoms, an alkylene group having 1 to 10 carbon atoms, an alkynyl group having 1 to 10 carbon atoms, or a halogen group, or $R_{62}$ and $R_{63}$ form a fused ring together to provide a cycloalkyl group having 5 to 20 carbon atoms, a cycloalkenyl group having 5 to 20 carbon atoms, or a cycloalkynyl group having 5 to 20 carbon atoms,
k is an integer of 1 or 2, and
* is a bonding site, and

[Formula 4]

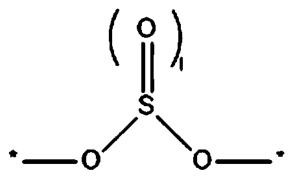

wherein in Formula 4 above, l is an integer of 1 or 2, and * is a bonding site.

**9.** The lithium secondary battery of claim 1, wherein the cyclic sulfur oxide-based compound comprises at least one selected from the group consisting of compounds represented by Formulas 2-a-1 to 2-a-25, Formula 2-b-1, Formula 2-c-1, Formula 2-d-1, Formula 2-e-1, Formula 2-e-2, Formula 2-f-1, and Formula 2-g-1 below:

[Formula 2-a-1]

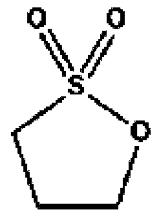

[Formula 2-a-2]

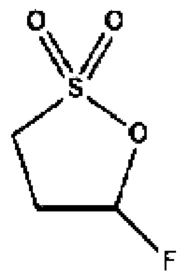

[Formula 2-a-3]

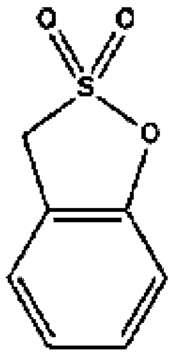

[Formula 2-a-4]

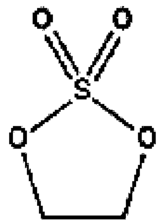

[Formula 2-a-5]

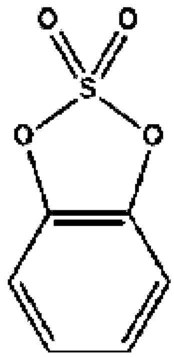

[Formula 2-a-6]

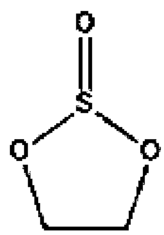

[Formula 2-a-7]

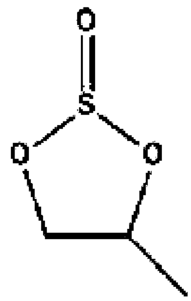

[Formula 2-a-8]

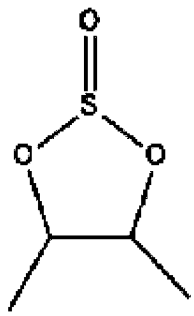

[Formula 2-a-9]

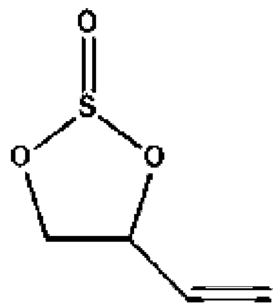

[Formula 2-a-10]

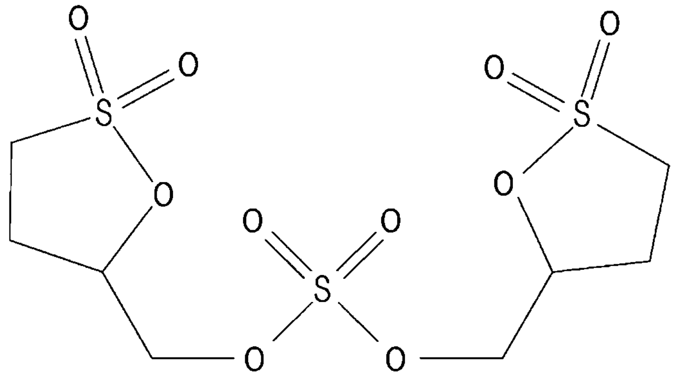

[Formula 2-a-11]

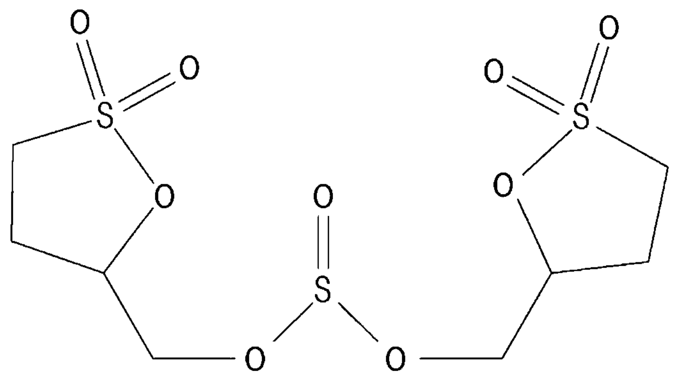

[Formula 2-a-12]

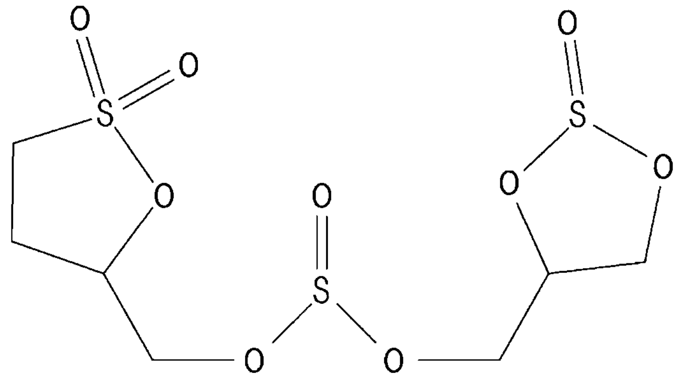

[Formula 2-a-13]

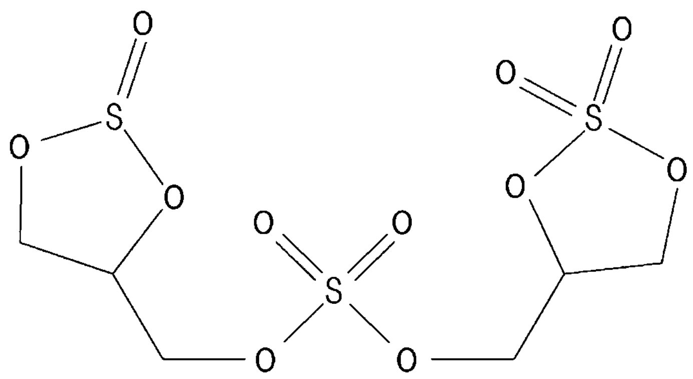

[Formula 2-a-14]

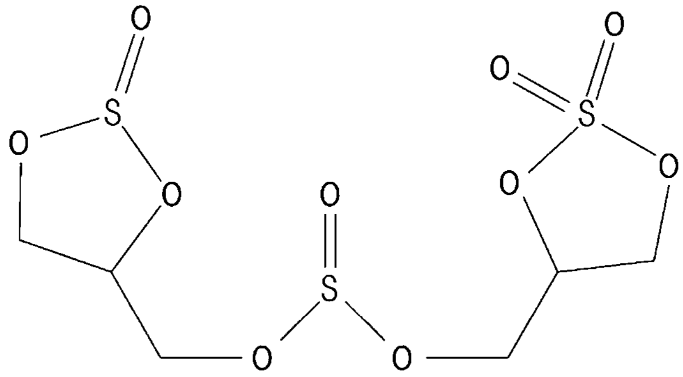

[Formula 2-a-15]

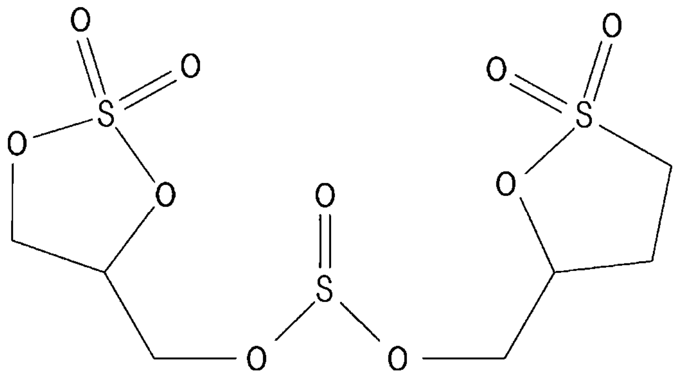

[Formula 2-a-16]

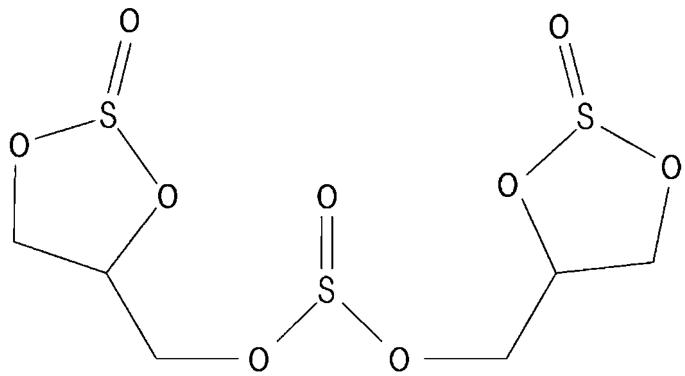

[Formula 2-a-17]

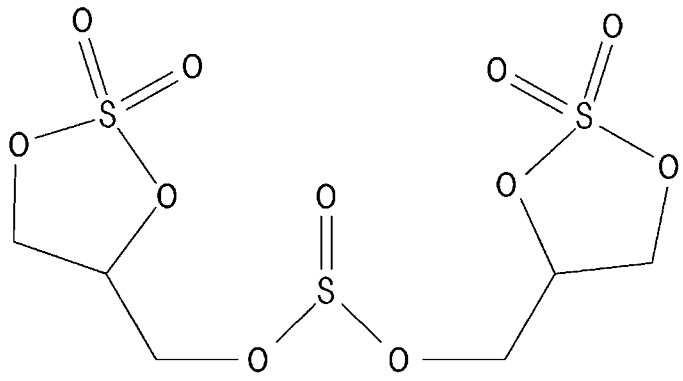

[Formula 2-a-18]

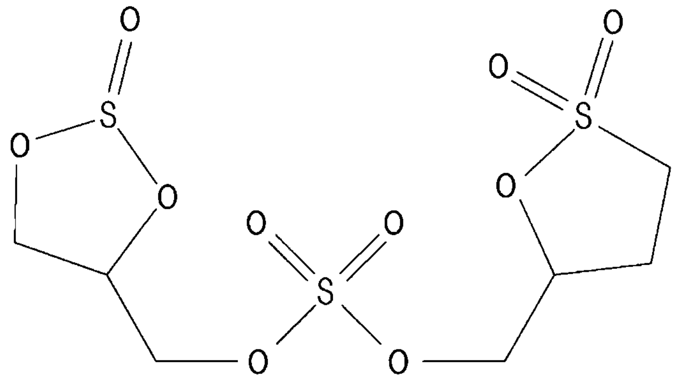

[Formula 2-a-19]

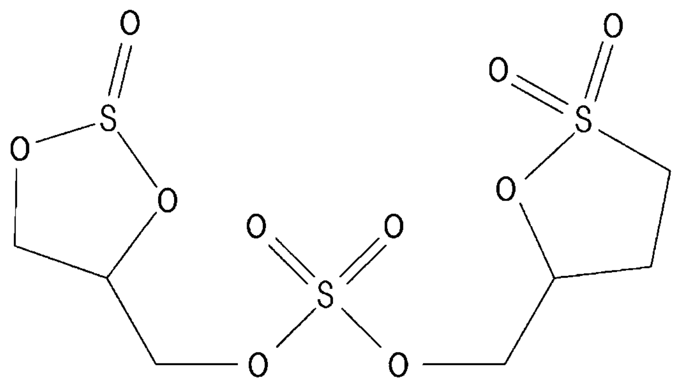

[Formula 2-a-20]

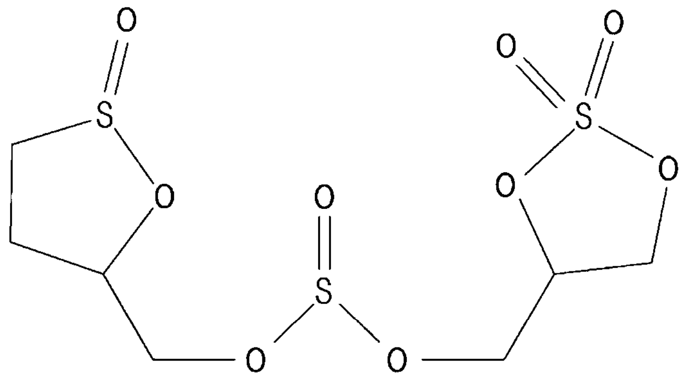

[Formula 2-a-21]

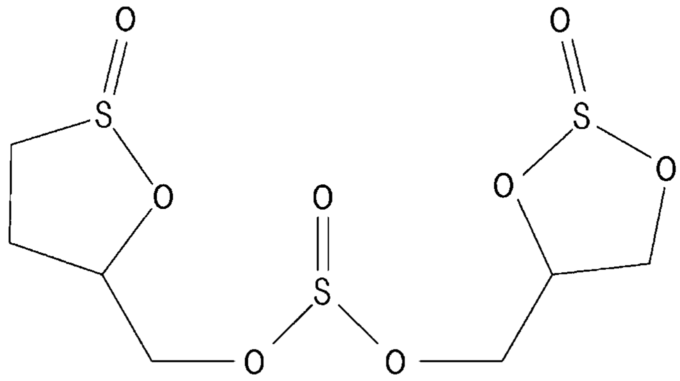

[Formula 2-a-22]

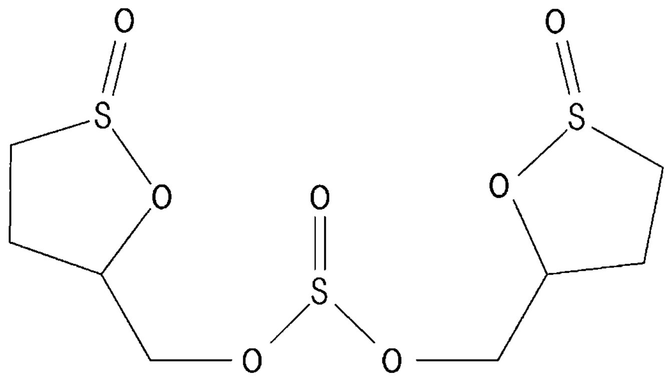

[Formula 2-a-23]

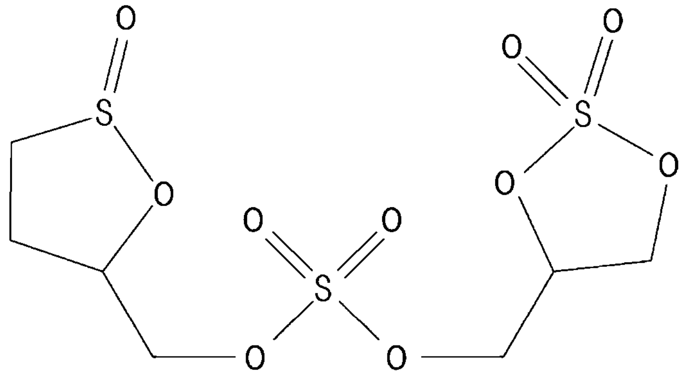

[Formula 2-a-24]

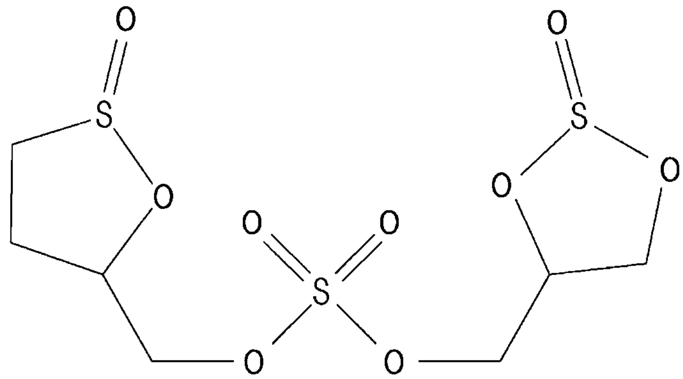

[Formula 2-a-25]

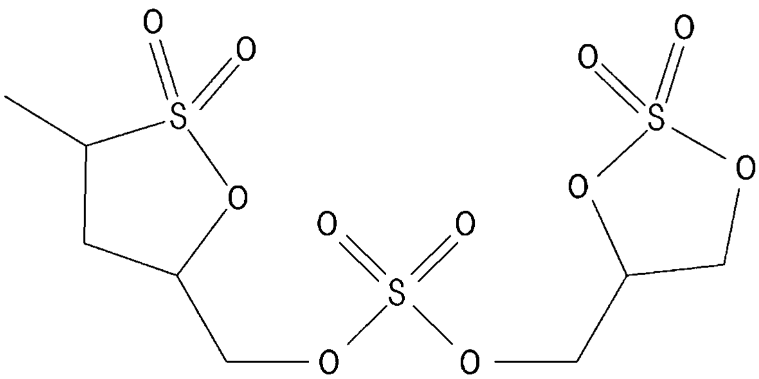

[Formula 2-b-1]

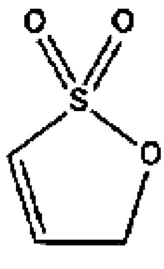

[Formula 2-c-1]

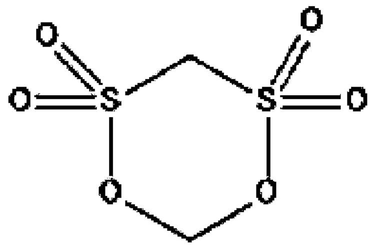

[Formula 2-d-1]

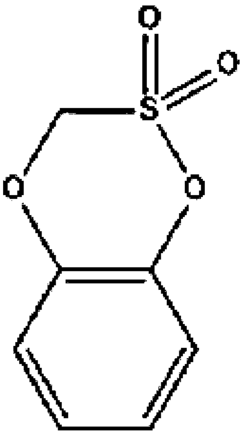

[Formula 2-e-1]

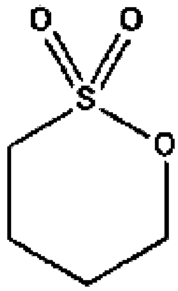

[Formula 2-e-2]

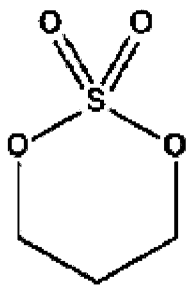

[Formula 2-f-1]

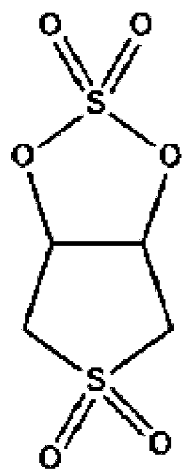

[Formula 2-g-1]

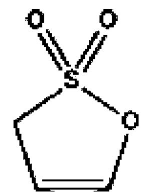

.

10. The lithium secondary battery of claim 1, wherein the second additive is included in an amount of 0.01 wt% to 10 wt% based on a total weight of the non-aqueous electrolyte.

11. The lithium secondary battery of claim 1, wherein the positive electrode active material comprises a lithium composite transition metal oxide represented by Formula A below:

[Formula A] $Li_{1+x}[Ni_aCo_bMn_cM^1_6]O_{2+w}$

wherein in Formula A above, $0 \leq x \leq 0.5$, $a+b+c+d = 1$, $0.5 \leq a \leq 0.7$, $0 \leq b \leq 0.15$, $c=1-a-b-d$, $0 \leq d \leq 0.1$, $0 \leq b/a \leq 0.2$, $1 \leq a/c \leq 3$, and $0 \leq w \leq 1$, and
$M^1$ is at least one selected from W, Cu, Fe, V, Cr, Ti, Zr, Zn, Al, In, Ta, Y, La, Sr, Ga, Sc, Gd, Sm, Ca, Ce, Nb, Mg, B, and Mo.

12. The lithium secondary battery of claim 1, wherein the negative electrode comprises a negative electrode active material, and
the negative electrode active material comprises at least one selected from the group consisting of a carbon-based active material and a silicon-based active material.

## INTERNATIONAL SEARCH REPORT

International application No.
**PCT/KR2024/020880**

**A. CLASSIFICATION OF SUBJECT MATTER**

**H01M 4/62**(2006.01)i; **H01M 10/0567**(2010.01)i; **H01M 10/052**(2010.01)i; **H01M 4/525**(2010.01)i; **H01M 4/505**(2010.01)i; **H01M 4/587**(2010.01)i

According to International Patent Classification (IPC) or to both national classification and IPC

**B. FIELDS SEARCHED**

Minimum documentation searched (classification system followed by classification symbols)

H01M 4/62(2006.01); H01M 10/052(2010.01); H01M 10/0567(2010.01); H01M 4/13(2010.01); H01M 4/525(2010.01); H01M 4/58(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal), STN (Registry, Caplus), Google & keywords: 이미다졸(imidazole), 양극(cathode, positive electrode), 피리딘(pyridine), 술톤(sultone), 리튬 이차 전지(lithium secondary battery)

**C. DOCUMENTS CONSIDERED TO BE RELEVANT**

| Category* | Citation of document, with indication, where appropriate, of the relevant passages | Relevant to claim No. |
|---|---|---|
| Y | KR 10-2021-0138937 A (LG ENERGY SOLUTION, LTD.) 22 November 2021 (2021-11-22) See claims 1-13; and paragraphs [0187] and [0188]. | 1,2,4-12 |
| A | | 3 |
| Y | KR 10-2020-0092310 A (ZEON CORPORATION) 03 August 2020 (2020-08-03) See claims 1-3 and 7-9; and paragraphs [0048] and [0050]. | 1,2,4-12 |
| A | CN 115911544 A (ZHANGJIAGANG GUOTAI-HUARONG NEW CHEMICAL MATERIALS CO., LTD.) 04 April 2023 (2023-04-04) See claims 1-10. | 1-12 |
| A | KR 10-2023-0093558 A (LG ENERGY SOLUTION, LTD.) 27 June 2023 (2023-06-27) See claims 1-10; and paragraphs [0073] and [0074]. | 1-12 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **28 March 2025** | **28 March 2025** |

| Name and mailing address of the ISA/KR | Authorized officer |
|---|---|
| **Korean Intellectual Property Office Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

INTERNATIONAL SEARCH REPORT

International application No.
PCT/KR2024/020880

C. DOCUMENTS CONSIDERED TO BE RELEVANT

| Category* | Citation of document, with indication, where appropriate, of the relevant passages | Relevant to claim No. |
|---|---|---|
| A | US 2018-0294483 A1 (CONTEMPORARY AMPEREX TECHNOLOGY CO., LIMITED) 11 October 2018 (2018-10-11) See claims 1-20. | 1-12 |

Form PCT/ISA/210 (second sheet) (July 2022)

**INTERNATIONAL SEARCH REPORT**
**Information on patent family members**

International application No.
**PCT/KR2024/020880**

| Patent document cited in search report | | | Publication date (day/month/year) | Patent family member(s) | | | Publication date (day/month/year) |
|---|---|---|---|---|---|---|---|
| KR | 10-2021-0138937 | A | 22 November 2021 | None | | | |
| KR | 10-2020-0092310 | A | 03 August 2020 | CN | 111357141 | A | 30 June 2020 |
| | | | | CN | 111357141 | B | 14 July 2023 |
| | | | | EP | 3719892 | A1 | 07 October 2020 |
| | | | | JP | 2020-107463 | A1 | 10 December 2020 |
| | | | | JP | 7264062 | B2 | 25 April 2023 |
| | | | | KR | 10-2699586 | B1 | 26 August 2024 |
| | | | | US | 11462740 | B2 | 04 October 2022 |
| | | | | US | 2020-0365901 | A1 | 19 November 2020 |
| | | | | WO | 2019-107463 | A1 | 06 June 2019 |
| CN | 115911544 | A | 04 April 2023 | CN | 115911544 | B | 01 March 2024 |
| | | | | EP | 4391135 | A1 | 26 June 2024 |
| | | | | US | 2024-0222705 | A1 | 04 July 2024 |
| | | | | WO | 2023-020314 | A1 | 23 February 2023 |
| KR | 10-2023-0093558 | A | 27 June 2023 | CN | 118414734 | A | 30 July 2024 |
| | | | | EP | 4435921 | A1 | 25 September 2024 |
| | | | | JP | 2024-546874 | A | 26 December 2024 |
| | | | | KR | 10-2566019 | B1 | 10 August 2023 |
| | | | | US | 2023-0198019 | A1 | 22 June 2023 |
| | | | | WO | 2023-121014 | A1 | 29 June 2023 |
| US | 2018-0294483 | A1 | 11 October 2018 | CN | 108695487 | A | 23 October 2018 |
| | | | | CN | 108695487 | B | 21 September 2021 |

Form PCT/ISA/210 (patent family annex) (July 2022)